# EUROPÄISCHE PATENTSCHRIFT

(11) **EP 0 514 330 B1**
(45) Veröffentlichungstag und Bekanntmachung des Hinweises auf die Patenterteilung: **17.07.1996**
(21) Anmeldenummer: 92810332.4
(22) Anmeldetag: 06.05.1992
(51) Int. Cl.: C09B 43/12, D06P 1/39

(54) **Azofarbstoffe**
Azodyes
Colorants azo

(30) Priorität: 15.05.1991 CH 1451/91
(43) Veröffentlichungstag der Anmeldung: 19.11.1992
(73) Patentinhaber: CIBA-GEIGY AG, 4002 Basel (CH)
(72) Erfinder: Lauk, Urs, Dr., CH-8047 Zürich (CH)

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Gegenstand der vorliegenden Erfindung sind Verbindungen der Formel 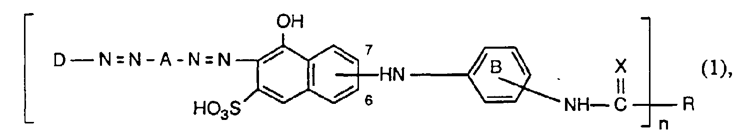 worin D einen 8-Hydroxy-1-naphthylrest, der durch 1 oder 2 Sulfogruppen substituiert ist, darstellt,

A für einen Rest der Formel 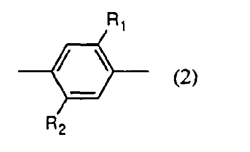 oder der Formel 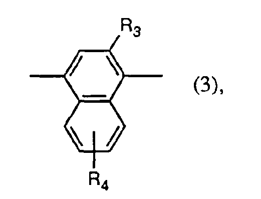 worin R₁ und R₂ unabhängig voneinander je Wasserstoff, C₁-C₄-Alkyl, unsubstituiertes oder im Alkylteil durch Hydroxy substituiertes C₁-C₄-Alkoxy oder C₂-C₄-Alkanoylamino, unsubstituiertes oder durch Cₗ-C₄₋Alkyl, C₁-C₄-Alkoxy oder Halogen substituiertes Benzoylamino oder Ureido bedeuten, R₃ Wasserstoff, C₁-C₄-Alkyl oder C₁-C₄-Alkoxy darstellt und R₄ Wasserstoff oder Sulfo ist, steht,
der Phenylenrest (B) unsubstituiert oder durch Halogen, C₁-C₄-Alkyl oder C₁-C₄-Alkoxy substituiert ist,
X für S oder O steht,
n die ganze Zahl 1 oder 2 bedeutet, und
R, falls n die Zahl 1 ist; gegebenenfalls substituiertes Alkyl, Alkoxy Cycloalkyl, Alkenyl, Aryl, Aralkyl oder Heteroaryl, oder, falls n die Zahl 2 ist, gegebenenfalls substituiertes Alkylen, Cycloalkylen, Alkenylen, Arylen, Aralkylen oder Heterocyclylen bedeutet.

Beispiele für geeignete 8-Hydroxy-1-naphthylreste D sind:
8-Hydroxy-3,6-disulfo-1-naphthyl;
8-Hydroxy-4,6-disulfo-1-naphthyl;
8-Hydroxy-2,4-disulfo-1-naphthyl;
8-Hydroxy-3,5-disulfo-1-naphthyl;
8-Hydroxy-4,7-disulfo-1-naphthyl;
8-Hydroxy-5,7-disulfo-1-naphthyl,
8-Hydroxy-4-sulfo-1-naphthyl,
8-Hydroxy-5-sulfo-1-naphthyl, und
8-Hydroxy-6-sulfo-1-naphthyl.

D steht bevorzugt für den 8-Hydroxy-3,6-disulfo-1-naphthyl-, 8-Hydroxy-4,6-disulfo-1-naphthyl-, 8-Hydroxy-2,4-di- ulfo-1-naphthyl- oder 8-Hydroxy-4-sulfo-1-naphthylrest und besonders bevorzugt für den B-Hydroxy-3,6-disulfo-1-naphthylrest.

Die Bedeutung Sulfo umfasst generell sowohl die freie Säureform (-S0₃H) als auch die Salzform, wobei insbesondere Alkalimetallsalze (Li, Na, K) oder Ammoniumsalze in Frage kommen.

Stehen R₁, R₂ oder eine der weiter unten genannten Variablen für C₁-C₄-Alkyl, handelt es sich um Methyl, Ethyl, n- oder iso-Propyl, oder n-, iso-, sec.- oder tert.-Butyl, vorzugsweise um Methyl oder Ethyl und besonders bevorzugt um Methyl.

Bedeuten R₁, R₂ oder eine der weiter unten genannten Variablen C₁-C4-Alkoxy, so ist hierunter generell Methoxy, Ethoxy, n-oder iso-Propoxy oder n-, iso-, sec.-oder tert.-Butoxy, vorzugsweise Methoxy oder Ethoxy und insbesondere bevorzugt Methoxy, zu verstehen. Für R₁ und R₂ kommen auch die im Alkylteil durch Hydroxy substituierten Reste in Betracht.

Bei R₁, R₂ oder den weiter unten genannten Variablen als C₂-C₄-Alkanoylaminorest handelt es sich z.B. um einen unsubstituierten oder durch Hydroxy substituierten Acetylamino-, Propionylamino oder Butyrylaminorest und vorzugsweise um einen unsubstituierten oder durch Hydroxy substituierten C₂-C₃-Alkanoylaminorest. Beispiele für geeignete Alkanoylaminoreste R₁ und R₂ sind Acetylamino, n-Propionylamino, iso-Propionylamino, Hydroxyacetylamino und 2-oder 3-Hydroxy-n-propionylamino, wobei die Bedeutung Acetylamino besonders bevorzugt ist.

Beispiele für geeignete Halogensubstituenten sind generell Brom, Fluor und besonders Chlor

Stehen R₁ oder R₂ für einen gegebenenfalls substituierten Benzoylaminorest, so kommt vorzugsweise ein unsubstituierter oder z.B. durch Methyl, Methoxy oder Chlor substituierter Benzoylaminorest und besonders bevorzugt der unsubstituierte Benzoylaminorest in Frage.

R₁ und R₂ bedeuten unabhängig voneinander bevorzugt Wasserstoff, Methyl, Ethyl, Methoxy, Ethoxy, Acetylamino, Hydroxyacetylamino, n-Propionylamino, Benzoylamino oder Ureido und besonders bevorzugt Wasserstoff, Methyl, Methoxy, Acetylamino oder Ureido. Als weitere Bedeutung für R₁ und R₂ ist ß-Hydroxyethyl bevorzugt.

Insbesondere bevorzugt sind für R₁ die Bedeutungen Methyl und Methoxy und für R₂ die Bedeutungen Wasserstoff, Methyl, Methoxy, Acetylamino und Ureido.

Steht die Variable A für einen Rest der Formel (2), leitet sie sich besonders bevorzugt von einer der folgenden Mittelkomponenten ab:
1-Amino-2-methoxy-5-methylbenzol,
1-Amino-2,5-dimethylbenzol,
1-Amino-2-methoxy-5-acetylaminobenzol,
1-Amino-2-methoxybenzol;
1-Amino-2-methylbenzol,
1-Amino-2,5-dimethoxybenzol,
1-Amino-2-methyl-5-acetylaminobenzol,
1-Amino-2-methoxy-5-ureidobenzol,
1-Amino-2-methyl-5-ureidobenzol,
1-Amino-3-methoxybenzol,
1-Amino-3-methylbenzol,
1-Amino-2-(2'-Hydroxyethoxy)-5-methylbenzol.

R₃ steht bevorzugt für Wasserstoff, Methyl, Ethyl, Methoxy oder Ethoxy und besonders bevorzugt für Wasserstoff, Methyl oder Methoxy.

R₄ hat bevorzugt die Bedeutung Sulfo.

Steht A für einen Rest der Formel (3), handelt es sich bei der zugrunde liegenden Mittelkomponente besonders bevorzugt um 1-Aminonaphthalin-6-, -7- oder -8-sulfonsäure oder um 1-Amino-2-methoxynaphthalin-6-sulfonsäure.

Eine besonders bevorzugte Ausführungsform der vorliegenden Erfindung betrifft Verbindungen der zuvor angegebenen Formel (1), worin A der Rest von 1-Amino-2-methoxy-5-methylbenzol ist.

Bei der dem Naphthylenrest zugrunde liegenden Komponente handelt es sich z.B. um 1-Hydroxy-3-sulfo-7-aminonaphthalin (y-Säure) oder vorzugsweise um 1-Hydroxy-3 -sulfo-6-aminonaphthalin (I-Säure), d.h. der Aminorest ist z.B. in 7-Stellung und vorzugsweise in 6-Stellung an den Naphthylenrest gebunden.

B stellt z.B. einen unsubstituierten oder durch Chlor, Methyl, Ethyl, Methoxy oder Ethoxy substituierten Phenylenrest, vorzugsweise einen unsubstituierten oder durch Chlor, Methyl oder Methoxy substituierten 1,3- oder 1,4-Phenylenrest und besonders bevorzugt den 1,4-Phenylenrest dar.

X steht bevorzugt für O.

Bei dem in Formel (1) in Klammern eingeschlossenen Rest handelt es sich bevorzugt um einen Rest der Formel 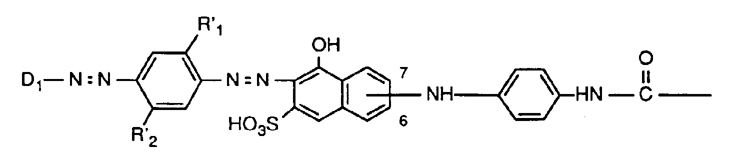 worin D₁ den 8-Hydroxy-3,6-disulfo-1-naphthyl-, 8-Hydroxy-4,6-disulfo-1-naphthyl-, 8-Hydroxy-2,4-disulfo-1-naphthyl-oder 8-Hydroxy-4-sulfo-1-naphthylrest, R'₁ Methyl oder Methoxy und R'₂ Wasserstoff, Methyl, Methoxy, Acetylamino oder Ureido bedeuten, und besonders bevorzugt um den Rest der Formel

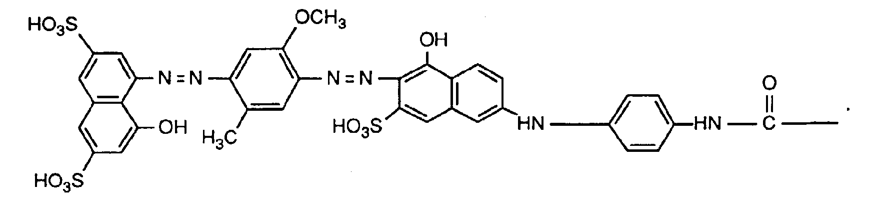

Bei R als gegebenenfalls substituiertem Alkylrest handelt es sich z.B. um einen gegebenenfalls substituierten C₁-C₆-Alkylrest. Beispiele sind ein Methyl-, Ethyl-, n- oder iso-Propyl- oder n-, iso-, sec- oder tert.-Butylrest oder ein geradkettiger oder verzweigter Pentyl- oder Hexylrest, der z.B durch C₁-C₄-Alkoxy, Cyano, Halogen, C₁-C₄-Alkoxycarbonyl, z.B Methoxy- oder Ethoxycarbonyl, C₂-C₅-Alkanoyloxy, z.B. Acetoxy, Propionyloxy, oder Carbamoyl substituiert und/oder mit Ausnahme von Methyl gegebenenfalls durch eine Gruppe -0-, -S- oder -N(CH₃)- unterbrochen sein kann.

Beispiele für geeignete Alkylreste R sind Methyl, Ethyl, n-Propyl, iso-Propyl, n-, iso-, sec.- oder tert.-Butyl, ß-Chlorethyl, β-Cyanethyl und β-Acetoxyethyl.

R steht als Alkylrest bevorzugt für einen unsubstituierten oder z.B. durch Chlor, Cyano oder Acetoxy substituierten und/oder mit Ausnahme von Methyl gegebenenfalls durch eine Gruppe -O- unterbrochenen C₁-C₄-Alkylrest.

Besonders bevorzugt ist für R als Alkyl die Bedeutung eines unsubstituierten C₁-C₄-Alkylrestes, und sind insbesondere die Bedeutungen Methyl und Ethyl.

Bei R als gegebenenfalls substituiertem Alkoxy handelt es z.B. um C₁-C₄-Alkoxy, wie Methoxy, Ethoxy, n- oder iso-Propoxy oder n-, iso-, sec.- oder tert.-Butoxy, vorzugsweise Methoxy oder Ethoxy und insbesondere bevorzugt Methoxy. Die genannten Reste können unsubstituiert oder z.B. durch Hydroxy substituiert sein.

Bei R als gegebenenfalls substituiertem Cycloalkyl handelt es sich z.B. um gegebenenfalls substituiertes C₅-C₉-Cycloalkyl und vorzugsweise um Cyclopentyl oder Cyclohexyl, welches unsubstituiert oder z.B. durch C₁-C₄-Alkyl, C₂-C₅-Alkanoylamino, z.B. Acetylamino oder n-Propionylamino, oder Benzoylamino substituiert ist.

R steht als Cycloalkyl besonders bevorzugt für unsubstituiertes oder durch 1 bis 3 Methylgruppen substituiertes Cyclopentyl oder Cyclohexyl und insbesondere bevorzugt für Cyclohexyl.

Stellt R gegebenenfalls substituiertes Alkenyl dar, kann es sich z.B. um den Phenylvinylrest handeln.

Steht R für Aryl, handelt es sich z.B. um unsubstituiertes oder z.B. durch Nitro, Halogen, wie z.B. Fluor, Chlor oder Brom, Cyano, C₁-C₄-Alkyl, C₁-C₄-Alkoxy, Phenoxy, N,N-Di-C₁-C₄-Alkylamino, C₂-C₄-Alkanoylamino, Benzoylamino, C₁-C₄-Alkoxycarbonyl, Carbamoyl, Sulfamoyl und/oder C₁-C₄-Alkylsulfonyl substituiertes Phenyl oder Naphthyl.

Vorzugsweise steht R als Aryl für unsubstituiertes oder durch Nitro, Fluor, Chlor, Brom, Methyl, Methoxy, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl oder für unsubstituiertes oder durch Nitro oder Chlor substituiertes 1- oder 2-Naphthyl.

Besonders bevorzugt ist für R als Aryl die Bedeutung eines unsubstituierten oder durch Chlor, Nitro, Methyl und/ oder Methoxy substituierten Phenylrestes oder eines unsubstituierten 1- oder 2-Naphthylrestes.

Insbesonders bevorzugte Bedeutungen von R als Aryl sind Phenyl, o-, m- und p-Chlorphenyl und 1 - und 2-Naphthyl.

Bei R als Aralkylrest handelt es sich z.B. um einen gegebenenfalls substituierten C₇-C₁₂-Aralkylrest und bevorzugt um einen Benzyl- oder Phenylethylrest, der gegebenenfalls z.B. durch C₁-C₄ Alkyl, Nitro, Halogen oder C₇-C₄-Alkoxy weitersubstituiert sein kann. R steht als Aralkylrest besonders bevorzugt für unsubstituiertes oder z.B. durch Methyl, Chlor und/oder Methoxy substituiertes Benzyl und stellt insbesondere bevorzugt den Benzylrest dar.

Beispiele für geeignete Heteroarylreste R sind Thiophen-2-yl, Furan-2-yl und Pyridin-2-, -3- oder -4-yl.

Bedeutet n die Zahl 1, so steht R vorzugsweise für C₁-C₄-Alkyl, C₁-C₄-Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1- oder 2-Naphthyl, unsubstituiertes oder durch Methyl, Methoxy und/oder Chlor substituiertes Benzyl oder für Thiophen-2-yl, Furan-2-yl oder Pydin-2-, -3- oder -4-yl.

Bedeutet n die Zahl 1, so steht R besonders bevorzugt für Methyl, Ethyl, unsubstituiertes oder durch Nitro, Chlor, Methyl und/oder Methoxy substituiertes Phenyl; für Thiophen-2-yl, Benzyl oderfür 1-oder 2-Naphthyl und insbesondere bevorzugt für Phenyl, o-, m- oder p-Chlorphenyl oder für 1 - und 2-Naphthyl.

Bei R als gegebenenfalls substituiertem Alkylenrest handelt es sich z.B. um einen gegebenenfalls substituierten C₂-C₆-Alkylenrest und bevorzugt um einen unsubstituierten oder z.B. durch C₁-C₄-Alkoxy; Cyano, Halogen, Phenyl oder C₁-C₄-Alkoxycarbonyl substituierten und/oder gegebenenfalls durch 1-2 Gruppen -O-, -N(R₅)-, worin R₅ C₁-C₄-Alkyl oder Acetyl bedeutet, -S-, -SO₂- oder einen cycloaliphatischen oder heterocyclisch-aliphatischen Rest unterbrochenen C₂-C₆ Alkylenrest.

Beispiele für geeignete Alkylenreste R sind 1,2-Ethylen, 1,2- und 1,3-Propylen, 1-Ethyl-1,2-ethylen; 1- und 2-Phenyl-1,3-propylen, 1,4-, 2,3- und 2,4-Butylen, 1,2-Dimethyl-1,2-ethylen, 1-Phenyl-1,2-ethylen, 2-Methyl-1,3-propylen, 2,2-Dimethyl-1,3-propylen, 1-Chlor-2,3-propylen, 1,5- und 2,4-pentylen, 2-Methyl-2,4-pentylen, 2,3-Diphenyl-1,4-butylen, 1-Methoxycarbonyl-1,5-pentylen, 1,6 und 2,5-Hexylen, 2-Carboxy-1,3-propylen, 2-Methoxy-1,3-propylen, ein Rest der Formel -CH₂-CH₂-Q-CH₂-CH₂-, worin Q -O-, -S-, -SO₂- oder -N(CH₃)- bedeutet oder ein Rest der Formel

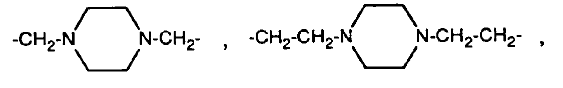

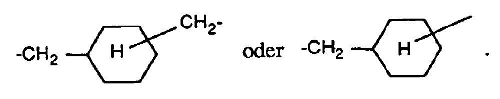

R steht als Alkylenrest besonders bevorzugt für einen unsubstituierten oder durch Methoxy substituierten C₂-C₄-Alkylenrest und insbesondere bevorzugt für 1,2-Ethylen oder 1,2- oder 1,3-Propy!en.

Bei R als gegebenenfalls substituiertem Cycloalkylen handelt es sich z.B. um gegebenenfalls substituiertes C₅ Cg-Cycloalkylen und bevorzugt um unsubstituiertes oder einfach oder mehrfach durch Cᵢ-C₃-Alkyl substituiertes Cyclopentylen oder Cyclohexylen; besonders bevorzugt steht hierbei R für unsubstituiertes oder durch 1 bis 3 Methylgruppen substituiertes Cyclohexylen.

Beispiele für geeignete cycloaliphatische Reste R sind:
1,3- und 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4,6-Dimethyl-1,3-cyclohexylen und 4-Methyl-1,2-cyclohexylen.

Stellt R einen Alkenylenrest dar, so kommt z.B. ein Rest -CH=CH- mit trans-ständig angeordneten H-Atomen in Frage.

Steht R für einen Arylenrest, so kann dies z.B. ein unsubstituierter oder z.B. durch C₁-C₄-Alkyl, C₁-C₄-Alkoxy und/ oder Halogen substituierter Phenylen-, Biphenylen- oder Naphthylenrest sein.

Beispiele für geeignete Arylenreste R sind: 1,3- und 1,4-Phenylen, 2-Methyl-1,4-phenylen, 2-Methoxy-1,4-phenylen, 1,4-Naphthylen und 1,1'-Biphenyl-4,4'-diyl.

R steht als Arylenrest vorzugsweise für einen unsubstituierten oder durch Methyl oder Methoxy substituierten 1,3-oder 1,4-Phenylenrest oder für einen unsubstituierten Naphthylenrest.

Bei R als Arylenrest handelt es sich besonders bevorzugt um unsubstituiertes 1,3- oder 1,4-Phenylen.

Bedeutet R einen gegebenenfalls substituierten Aralkylenrest, so kann dies z.B. ein C₁-C₆-Alkylen-phenylen-, ein Phenylen-C₁-C₆-alkylen-phenylen-, ein C₁-C₃-Alkylen-phenylen -C₁-C₃-alkylen-oder ein Methylen-naphthylen-methylenrest sein, wobei in diesen Aralkylenresten das Alkylen gegebenenfalls wie zuvor angegeben substituiert und/oder durch eine der zuvor genannten Heterogruppen unterbrochen sein kann und das Phenylen und Naphthylen gegebenenfalls noch 1 oder 2 Substituenten ausgewählt aus der Gruppe Sulfamoyl, Carbamoyl, Methyl, Ethyl, Methoxy Ethoxy, Nitro, Chlor, N,N-Dimethyl- und N,N-Diethylamino und Phenylamino tragen kann.

Beispiele für geeignete Aralkylenreste R sind

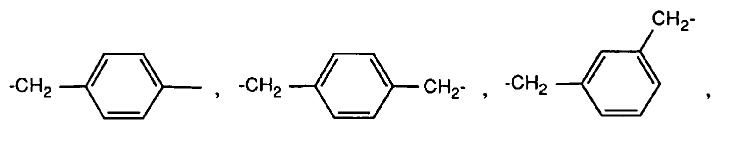

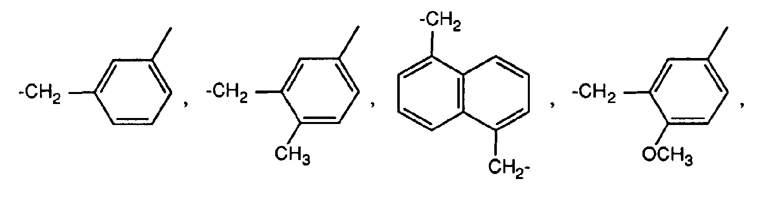

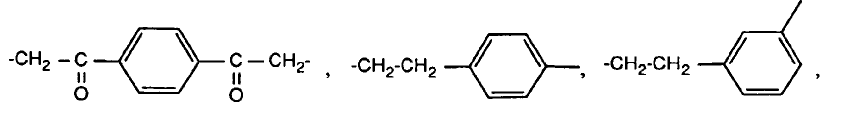

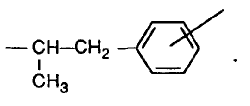

R stellt als Aralkylenrest bevorzugt einen C₁-C₃-Alkylen-phenylen- oder C₁-C₂-Alkylen-phenylen -C₁-C₂-alkylenrest dar, der im Phenylteil unsubstituiert oder z.B. durch Methyl, Methoxy oder Chlor substituiert ist.

Bedeutet R einen Heterocyclylenrest, so kann dies z.B. der Piperazin- 1,4-diyl-, Furan-2,5-diyl- oder Thiophen-2,5-diylrest sein.

Bedeutet n die Zahl 2, so bedeutet R vorzugsweise einen unsubstituierten oder durch Methoxy substituierten C₂-C₄-Alkylenrest, einen unsubstituierten oder durch 1 bis 3 Methylgruppen substituierten Cyclohexylenrest, den Rest trans -CH=CH-, einen unsubstituierten oder durch Methyl oder Methoxy substituierten 1,3- oder 1,4-Phenylenrest, einen C₁-C₃-Alkylen-phenylen-oder C₁-C₂ Alkylen-phenylen-C₁-C₂-alkylenrest, worin das Phenylen jeweils unsubstituiert oder durch Methyl, Methoxy oder Chlor substituiert ist, oder den Piperazin- 1,4-diyl-, Furan-2,5-diyl- oder Thiophen-2,5-diylrest.

Bedeutet n die Zahl 2, so bedeutet R besonders bevorzugt 1,3- oder 1,4-Phenylen, Piperazin-1,4-diyl, Thiophen-2,5-diyl oder trans -CH=CH-.

Von Bedeutung wegen ihrer guten färberischen Eigenschaften sind Verbindungen der zuvor angegebenen Formel (1), worin D den 8-Hydroxy-1-naphthyl-3,6-disulfo-, 8-Hydroxy-4,6-disulfo-1-naphthyl-, 8-Hydroxy-2,4-disulfo-1-naphthyl-, 8-Hydroxy-3, 5-disulfo-1-naphthyl-, 8-Hydroxy-4,7-disulfo-1-naphthyl-, 8-Hydroxy-5,7-disulfo-1-naphthyl-, 8-Hydroxy-4-sulfo-1-naphthyl-, 8-Hydroxy-5-sulfo-1-naphthyl- oder 8-Hydroxy-6-sulfo-1-naphthylrest darstellt, A für einen Rest der zuvor angegebenen Formel (2), worin R₁ und R₂ unabhängig voneinander Wasserstoff, Methyl, Ethyl, Methoxy, Ethoxy, Acetylamino, Hydroxyacetylamino, n-Propionylamino, Benzoylamino oder Ureido bedeuten, oder für einen Rest der zuvor angegebenen Formel (3), worin R₃ Wasserstoff, Methyl oder Methoxy und R₄ Sulfo bedeuten, steht, B unsubstituiertes oder durch Chlor, Methyl, Ethyl, Methoxy oder Ethoxy substituiertes Phenylen bedeutet, Xfür O und n für die Zahl 1 oder 2 steht, und worin R, falls n die Zahl 1 ist, C₁-C₄-Alkyl, C₁-C₄-Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy N,N-Dimethyl- oder N,N-Dielhylamino, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1 - oder 2-Naphlhyl, unsubstituiertes oder durch Methyl, Methoxy und/oder Chlor substituiertes Benzyl oder Thiophen-2-yl, Furan-2-yl oder Pyridin-2-, -3- oder -4-yl bedeutet, oder, falls n die Zahl 2 ist, für einen unsubstituierten oder durch Methoxy substituierten C₂-C₄-Alkylenrest, einen unsubstituierten oder durch 1 bis 3 Methylgruppen substituierten Cyclohexylenrest, den Rest trans -CH=CH-, einen unsubstituierten oder durch Methyl oder Methoxy substituierten 1,3-oder 1,4-Phenylenrest, einen C₁-C₃-Alkylen-phenylen- oder C₁-C₂-Alkylen-phenylen-C₁-C₂-alkylenrest, worin das Phenylen jeweils unsubstituiert oder durch Methyl, Methoxy oder Chlor substituiert ist, oder für den Piperazin- 1,4-diyl-, Furan-2,5-diyl- oder Thiophen-2,5-diylrest steht.

Von besonderer Bedeutung wegen ihrer guten färberischen Eigenschaften sind Verbindungen der Formel 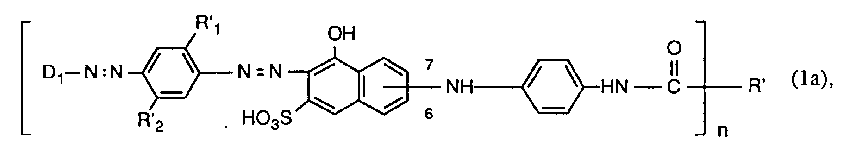 worin D₁ den 8-Hydroxy-3,6-disulfo-1-naphthyl-, 8-Hydroxy-4,6-disulfo-1-naphthyl-, 8-Hydroxy-2,4-disulfo-1-naphthyl-oder 8-Hydroxy-4-sulfo-1-naphthylrest, R'₁ Methyl oder Methoxy, R'₂ Wasserstoff, Methyl, Methoxy, Acetylamino oder Ureido und n die Zahl 1 oder 2 bedeuten, und worin R', falls n 1 ist, für Methyl, Ethyl, unsubstituiertes oder durch Nitro, Chlor, Methyl und/oder Methoxy substituiertes Phenyl, für Thiophen-2-yl, Benzyl oder für 1- oder 2-Naphthyl steht, oder, falls n die Zahl 2 ist, 1,3-oder 1,4-Phenylen, Piperazin- 1,4-diyl, Thiophen-2,5-diyl odertrans-CH=CH-bedeutet.

Eine besonders bevorzugte Ausführungsform der vorliegenden Erfrindung betrifft Verbindungen der Formel 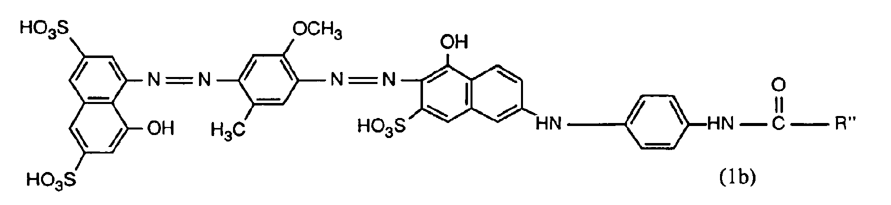 worin R" Phenyl; o-, m- oder p-Chlorphenyl oder 1- oder 2-Naphthyl bedeutet.

Die Verbindungen der Formel (1) können erhalten werden, z.B. indem man eine Verbindung der Formel 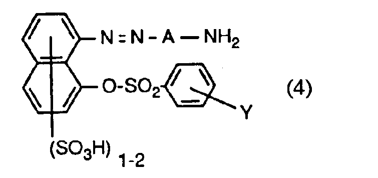 diazotiert und auf eine Verbindung der Formel 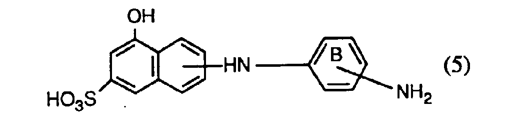 kuppelt; und das erhaltene Disazoprodukt der Formel 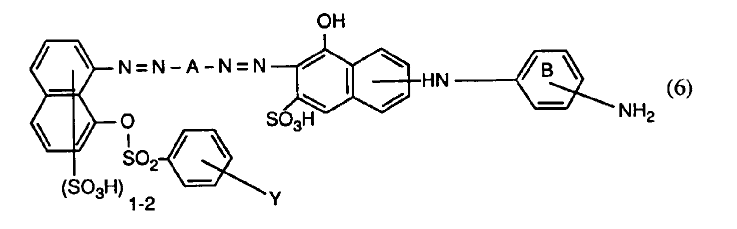 verseift und anschliessend mit einer Verbindung der Formel 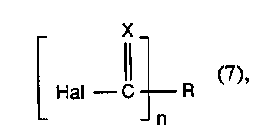 umsetzt, worin A, B, R, X und n jeweils die zuvor angegebene Bedeutung haben, Y Wasserstoff, C,-C₄-Alkyl oder Halogen ist und Hal Halogen, vorzugsweise Chlor, bedeutet.

Die Verbindungen der Formeln (4), (5) und (6) sind bekannt oder können in bekannter Weise erhalten werden.

Die Diazotierung der Verbindung der Formel (4) erfolgt in an sich bekannter Weise, z.B mit einem Nitrit, z.B. mit einem Alkalimetallnitrit wie Natriumnitrit, in einem mineralsauren Medium, z.B. in einem salzsauren Medium, bei Temperaturen von -5 bis 30°C und vorzugsweise 0 bis 10°C.

Die Kupplung der diazotierten Verbindung der Formel (4) mit der Verbindung der Formel (5) wird ebenfalls unter üblichen, an sich bekannten, Bedingungen durchgeführt. Man arbeitet zweckmässig bei einem leicht sauren, neutralen oder alkalischen pH-Wert und Temperaturen von ca. -5 bis 30°C, vorzugsweise 0 bis 15°C, in einem wässrigen oder wässrig-organischen Medium. Bevorzugt ist für die Kupplungsreaktion ein neutrales oder alkalisches Medium, das einen pH-Wert von z.B. 7 bis 12 aufweist; der pH-Wert kann durch Zugabe von Basen, z.B. Alkalimetallhydroxiden, -carbonaten oder -acetaten wie Lithium-, Natrium- oder Kaliumhydroxid oder -carbonat, Natriumacetat usw., Ammoniak oder organischen Aminen eingestellt und stabilisiert werden.

Die Verbindungen der Formeln (4) und (5) werden im allgemeinen in etwa stöchiometrischen Mengen in das Verfahren eingesetzt.

Auch die Verseifung der Verbindung der Formel (6) zur entsprechenden Hydroxyverbindung erfolgt in an sich bekannter Weise, zweckmässig durch Erhitzen in einem wässrig-alkalischen Medium, z.B. indem man die rohe Lösung der Verbindung der Formel (6) mit einer der zuvor genannten Basen, z B. mit Natrium- oder Kaliumhydroxid, versetzt und auf eine Temperatur von z.B. 20 bis 150°C und vorzugsweise 30 bis 100°C erhitzt.

Die Umsetzung der verseiften Verbindung der Formel (6) mit der Verbindung der Formel (7) wird vorteilhaft in einem wässrigen oder wässrig-organischen Medium bei einer Temperatur von z B. 0 bis 100 °C und vorzugsweise 20 bis 80°C durchgeführt. Man arbeitet zweckmässig bei einem leicht alkalischen, neutralen oder leicht sauren pH-Wert, d.h. bei einem pH-Wert von ca. 4,5 bis 9 und vorzugsweise 5,5 bis 7,5; der pH-Wert kann durch die kontrollierte Zugabe einer der zuvor genannten Basen eingestellt und während der Umsetzung konstant gehalten werden.

Bedeutet n die Zahl 1, so werden die Verbindungen der Formeln (6) und (7) in etwa stöchiometrischen Mengen umgesetzt; ein gewisser Ueberschuss der Verbindung der Formel (7) hat sich dabei als vorteilhaft erwiesen.

Bedeutet n die Zahl 2, so werden im allgemeinen mindestens 2 Mol-Aequivalente Verbindung der Formel (6) pro Mol-Aequivalent Verbindung der Formel (7) eingesetzt, wobei sich ein gewisser Ueberschuss an Verbindung der Formel (6) als vorteilhaft erwiesen hat.

Ein alternatives Verfahren zur Herstellung der Verbindungen der Formel (1) besteht darin, dass man die Verbindung der Formel (6) in Umkehrung der zuvor beschriebenen Reaktionsfolge erst mit der Verbindung der Formel (7) umsetzt und dann den Verseifungsschritt anschliesst.

Ein weiteres Verfahren zur Herstellung der Verbindungen der Formel (1) ist dadurch gekennzeichnet, dass man die Verbindung der Formel (4) wie zuvor beschrieben diazotiert, in an sich bekannter Weise auf eine Verbindung der Formel 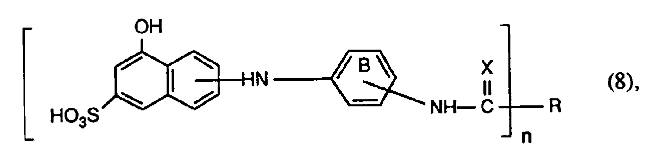 worin B, R, X und n die zuvor angegebene Bedeutung haben, kuppelt und im Anschluss den Phenylsulfonylrest in der zuvor angegebenen Weise verseift.

Die Verbindungen der Formel (8), ausgenommen diejenigen der Formeln 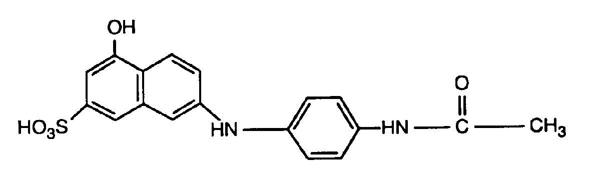 und 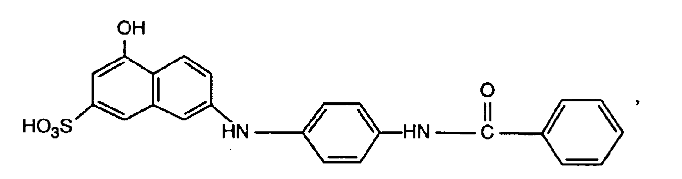 sind neu und stellen einen weiteren Gegenstand der Erfindung dar.

Ein weiterer Gegenstand der Erfindung ist die Verwendung der Verbindungen der Formel (1) als Farbstoffe zum Färben oder Bedrucken von stickstoffhaltigen und insbesondere hydroxylgruppenhaltigen Fasermaterialien.

Die erfindungsgemässen Verbindungen der Formel (1) eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Dietextilen Fasermaterialien können in den verschiedensten Verarbeitungszuständen vorliegen, wie z.B. als Faser, Garn, Gewebe oder Gewirke. Neben den textilen Substraten können auch Leder und Papier mit den erfindungsgemässen Farbstoffen und Farbstoff-gemischen gefärbt werden.

Man erhält egale Färbungen in blauen Farbtönen mit guten Allgemeinechtheiten, z.B. guten Reib-, Nass-, Nassreib- und Schweissechtheiten. Besondere Erwähnung verdient die gute Lichtechtheit der mit den erfindungsgemässen Farbstoffen erhältlichen Färbungen; die Farbstoffe der Formel (1) sind ausserdem durch einen hohen Ausziehgrad sowie ein gutes Aufbauvermögen gekennzeichnet. Sofern nötig, kann man die Nassechtheiten, insbesondere die Waschechtheit, der erhaltenen Direktfärbungen und -drucke durch eine Nachbehandlung mit sog. Fixiermitteln noch weiter steigern.

Die erfindungsgemässen Farbstoffe sind gut mit anderen Farbstoffen, insbesondere Dispersionsfarbstoffen kombinierbar. Die erfindungsgemässen Farbstoffe weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 100 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie der erfindungsgemässe Farbstoff bzw. das Farbstoffgemisch sie aufweisen, so ist es auch möglich Ton-in-Ton-Färbungen zu erhalten.

Mit der Bereitstellung der erfindungsgemässen Farbstoffe kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Verbindungen der Formel (1) eignen sich auch zur Herstellung von wässrigen Tinten für den Tintenstrahldruck (ink-jet printing)

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 157 Teile der Verbindung der Formel 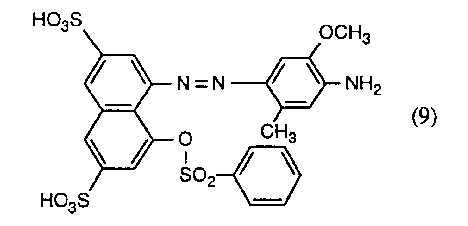 werden mit Natriumnitrit und Salzsäure in üblicher Weise diazotiert und die erhaltene Diazosuspension innerhalb von ca. 30 Minuten bei 0 bis 5°C zu einer Suspension aus 82 Teilen 6-(4'-Aminophenylamino)-1-hydroxynaphthalin-3-sulfonsäure in 1000 Teilen Wasser getropft; dabei wird der Kupplungs-pH-Wert durch Zugabe von Natriumhydroxidlösung konstant bei ca. 8,5 gehalten. Man lässt ca. 8 bis 15 Stunden bei pH 8,5 ausrühren und stellt dann den pH-Wert mit Natriumhydroxidlösung auf 12 bis 13 ein. Das Reaktionsgemisch wird anschliessend ca. 2,5 Stunden bei einer Temperatur von 85 bis 90°C gerührt und die entstehende Lösung nach dem Abkühlen auf Raumtemperatur mit konz. HCI auf einen pH-Wert von 6,5 bis 7 eingestellt. Die Verbindung der Formel 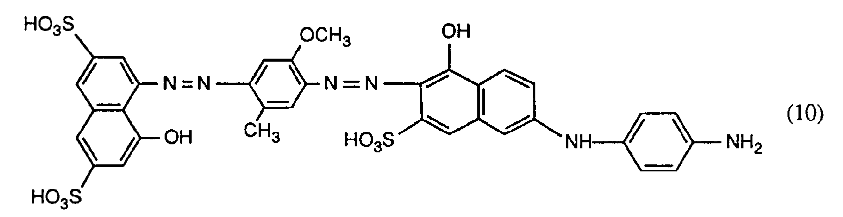 wird anschliessend mit Kochsalz ausgesalzen, abfiltriert und getrocknet.

Beispiel 2: 81 Teile der gemäss Beispiel 1 erhaltenen Verbindung der Formel (10) werden in 6000 Teilen Wasser heiss gelöst. Nach dem Abkühlen auf Raumtemperatur werden 20 Teile 3-Chlorbenzoylchlorid zugetropft und das Reaktionsgemisch unter Einhaltung eines pH-Werts von 6 ausreagieren gelassen, bis keine Natriumhydroxidlösung mehr verbraucht wird (Dauer ca. 3 bis 6 Stunden). Danach wird der pH-Wert mit Salzsäure auf 1 gestellt und das Produkt mit Kochsalz ausgesalzen. Man erhält nach dem Abfiltrieren und Trocknen die Verbindung der Formel 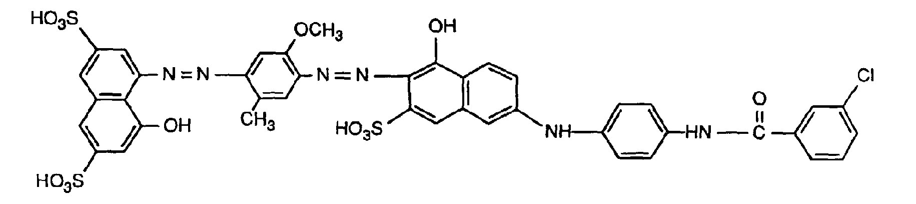 die Baumwolle in einer blauen Nuance mit guten Allgemeinechtheiten färbt.

Beispiele 3 bis 17: In analoger Weise zu den Beispielen 1 und 2 lassen sich die Verbindungen der Formel

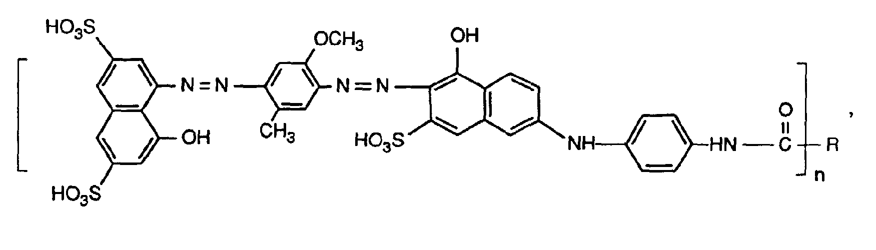

worin R und n die in der Tabelle 1 angegebenen Bedeutungen haben, herstellen:

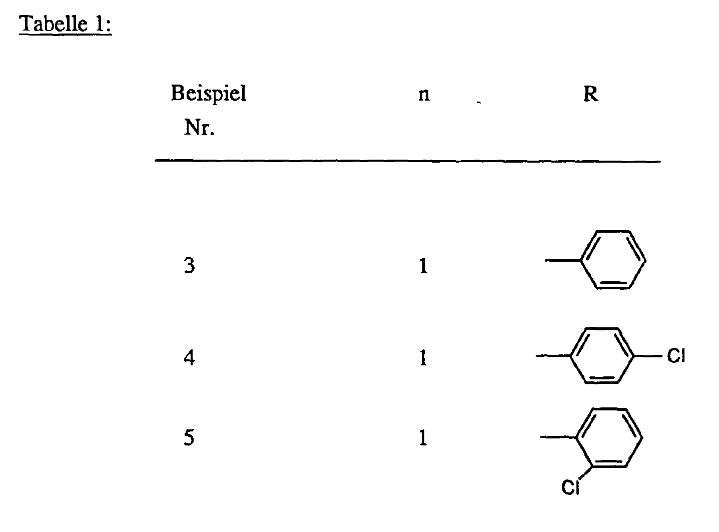

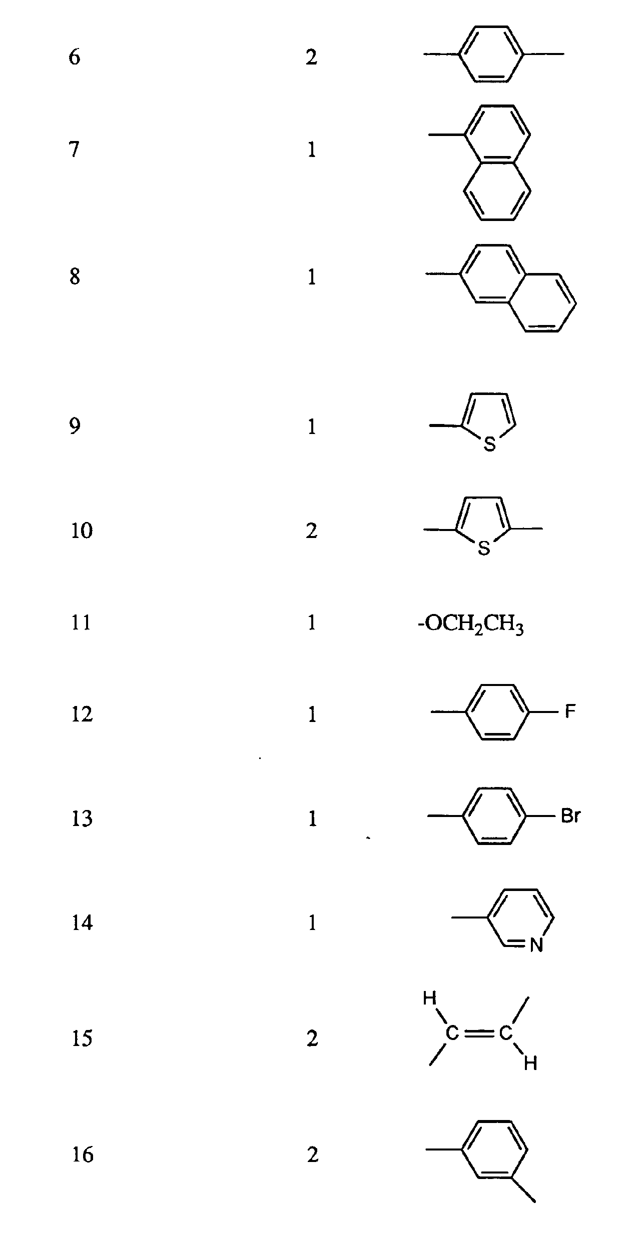

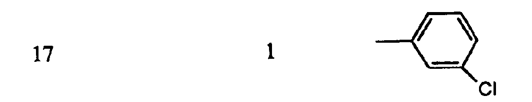

Beispiele 18 bis 31: In analoger Weise zu den Beispielen 1 und 2 lassen sich die Verbindungen der Formel 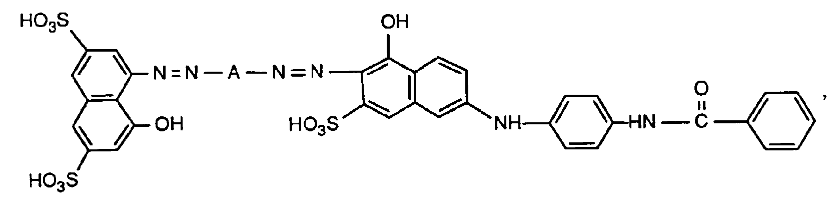 worin A die in der Tabelle 2 angegebenen Bedeutungen hat, herstellen:

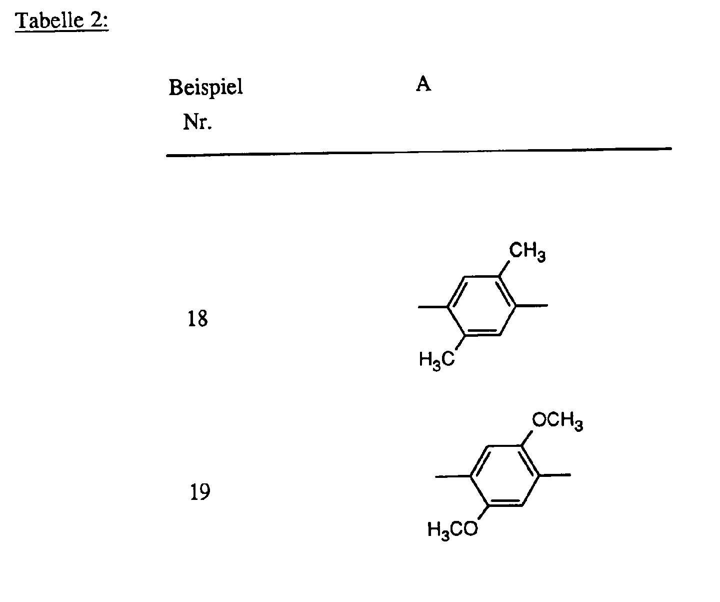

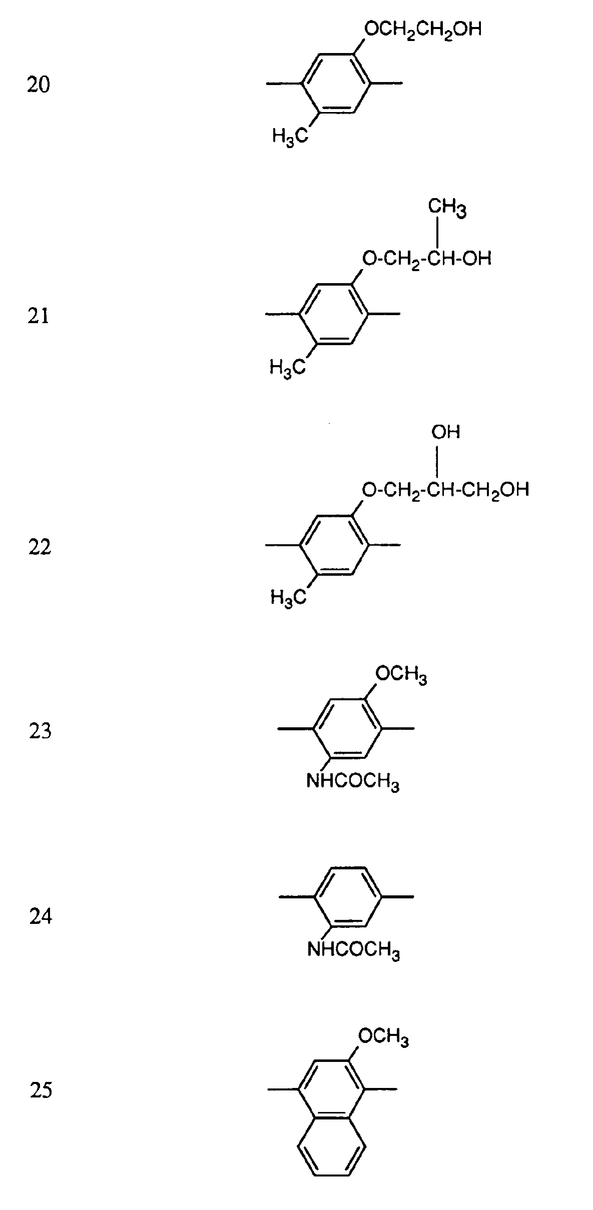

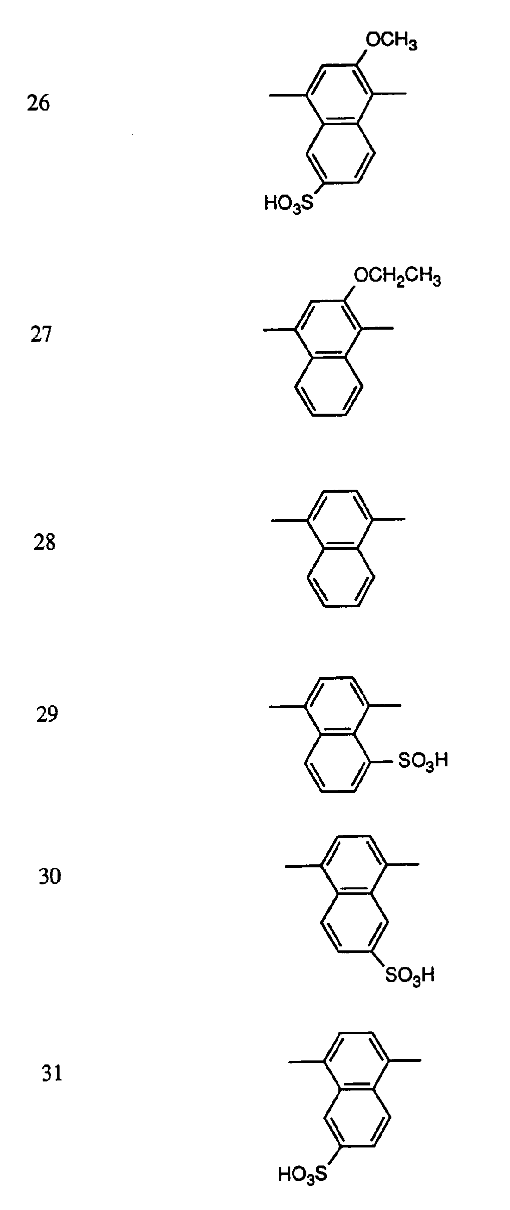

Beispiele 32 bis 46: In analoger Weise zu den Beispielen 1 und 2 lassen sich die Verbindungen der Formel 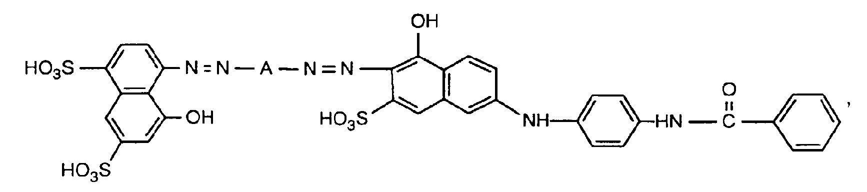 worin A die in der Tabelle 3 angegebenen Bedeutungen hat, herstellen:

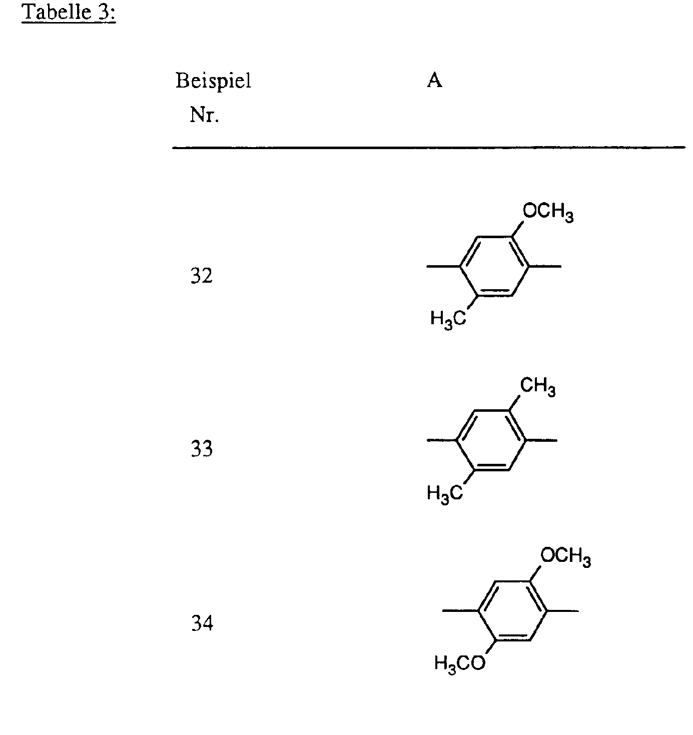

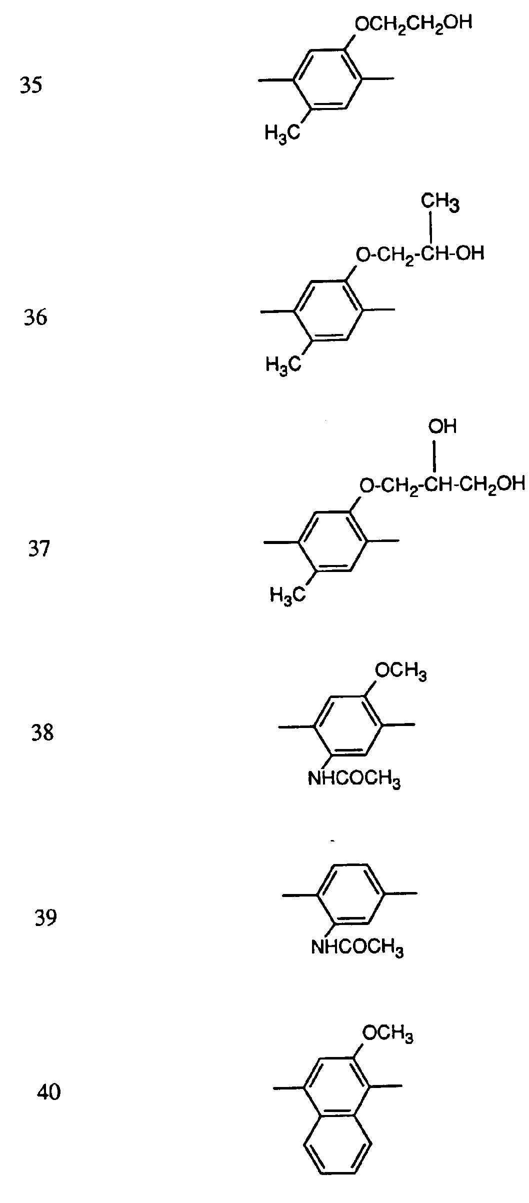

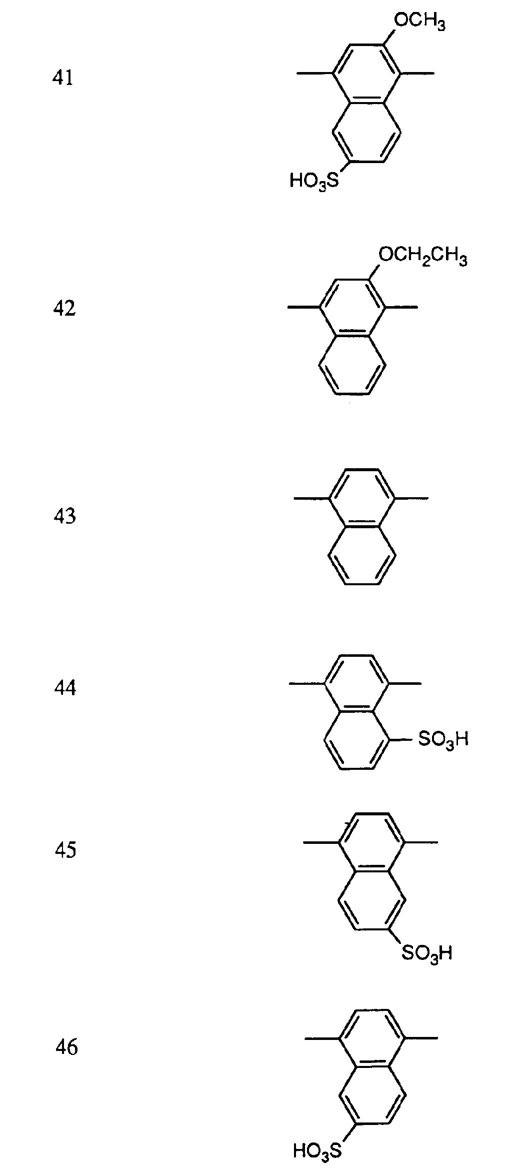

Beispiele 47 bis 49: In analoger Weise zu den Beispielen 1 und 2 lassen sich die Verbindungen der Formel 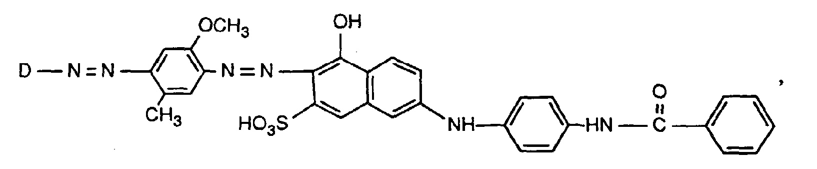 worin D die in der Tabelle 4 angegebenen Bedeutungen hat, herstellen:

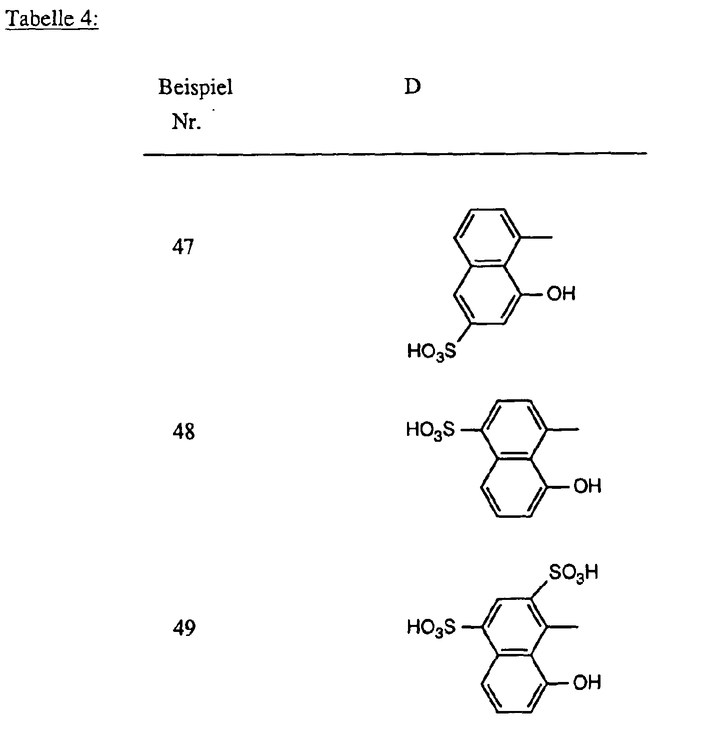

### Beispiel 50:

a) 21,75 Teile 6-(4'-Aminophenylamino)-1-hydroxynaphthalin-3-sulfonsäure (75,9%) werden mit 3 Teilen Natriumacetat und 500 Teilen Wasserverrührt, auf 55°C erwärmt und bis zur Lösung gerührt. Durch Zugabe von 4-normaler Natriumhydroxidlösung wird ein pH-Wert von 7,6 eingestellt. Unter Einhaltung dieses pH-Wertes werden bei einer Temperatur von 40°C 5,85 Teile Chlorameisensäure innerhalb von 15 Minuten zugetropft. Die Reaktion ist nach ca. 1 Stunde beendet und man erhält eine Lösung, welche die Verbindung der Formel 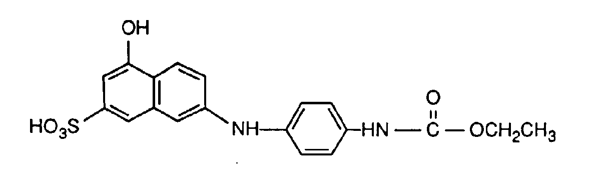 enthält.
b) 31,6 Teile der Verbindung der Formel 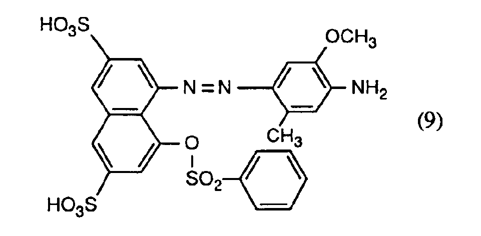 werden mit Natriumnitrit und Salzsäure in üblicher Weise diazotiert und die erhaltene Diazosuspension innerhalb von ca. 30 Minuten bei 0 bis 5°C zu der gemäss a) erhaltenen Suspension getropft; dabei wird der Kupplungs-pH-Wert durch Zugabe von Natriumhydroxidlösung konstant bei ca. 8,5 gehalten. Man lässt ca. 8 bis 15 Stunden bei pH 8,5 ausrühren und stellt dann den pH-Wert mit Natriumhydroxidlösung auf 12 bis 13 ein. Das Reaktionsgemisch wird anschliessend ca. 2,5 Stunden bei einer Temperatur von 85 bis 90°C gerührt und die entstehende Lösung nach dem Abkühlen auf Raumtemperatur mit konz. HCI auf einen pH-Wert von 6,5 bis 7 eingestellt. Die Verbindung der Formel 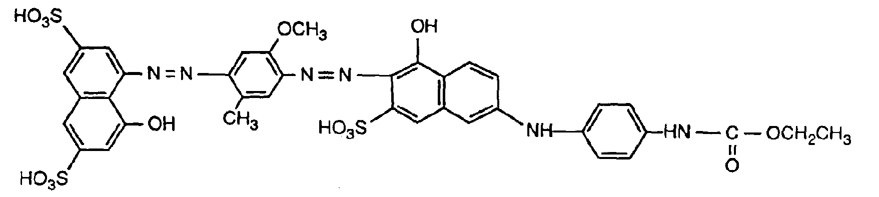 wird anschliessend mit Kochsalz ausgesalzen, abfiltriert und getrocknet.

Beispiel 51: 16,5 Teile 6(4'-Aminophenylamino)1-hydroxynaphthalin-3-sulfonsäure werden in 1500 Teilen Wasser warm gelöst Nach dem Abkühlen auf Raumtemperatur werden innerhalb von ca. 30 Minuten 9,65 Teile 4-Chlorbenzoylchlorid zugetropft und das Reaktionsgemisch unter Einhaltung eines pH-Werts von 6 ausreagieren gelassen, bis keine Natriumhydroxidlösung mehr verbraucht wird (Dauer ca. 2,5 bis 4 Stunden). Danach wird der pH-Wert mit Salzsäure auf 1 gestellt und das Produkt mit Kochsalz ausgesalzen. Man erhält nach dem Abfiltrieren und Trocknen die Verbindung der Formel

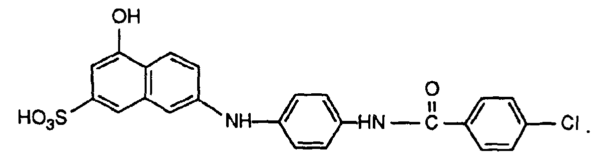

Verwendet man anstelle von 4-Chlorbenzoylchlorid eine äquivalente Menge Benzoylchlorid oder 3-Chlorbenzoylchlorid, erhält man analoge Zwischenprodukte.

Färbebeispiel: 12,5 Teile eines nicht mercerisierten, ungebleichten Baumwollgewebes werden mit einem Teil eines nichtionogenen Netzmittels bei einer Temperatur von 80°C eingenetzt. Das Baumwollgewebe wird abgequetscht und in eine 50°C warme Farbstofflösung, welche 1,0% des gemäss Beispiel 3 erhaltenen Farbstoffes enthält, bei einem Flottenverhältnis von 1:20 eingetragen. Man erhitzt das Färbebad innerhalb von 30 Minuten auf Kochtemperatur, gibt 15 g/I Natriumsulfat in drei Portionen zu und belässt das Färbebad 45 Minuten bei der Kochtemperatur. Anschliessend wird das gefärbte Baumwollgewebe aus dem Bad herausgenommen. Nach Spülung mit kaltem Wasser und Trocknung erhält man ein in einem blauen Farbton gefärbtes Baumwollgewebe, welches gute Allgemeinechtheiten aufweist.

## Patentansprüche (Patentansprüche für folgende(n) Vertragsstaat(en) : BE, CH, DE, FR, GB, IT, LI)

1. Verbindungen der Formel 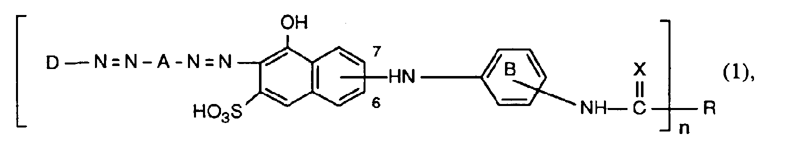 worin D einen 8-Hydroxy-1-naphthylrest, der durch 1 oder 2 Sulfogruppen substituiert ist, darstellt,
A für einen Rest der Formel 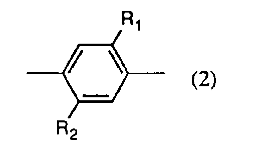 oder der Formel 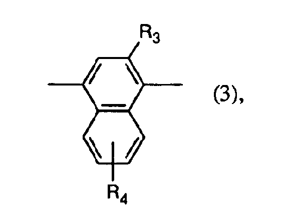 worin R₁ und R₂ unabhängig voneinander je Wasserstoff, C₁-C₄-Alkyl, unsubstituiertes oder im Alkylteil durch Hydroxy substituiertes C₁-C₄-Alkoxy oder C₂₋C₄-Alkanoylamino, unsubstituiertes oder durch C₁-C₄-Alkyl, C₁-C₄-Alkoxy oder Halogen substituiertes Benzoylamino oder Ureido bedeuten, R₃ Wasserstoff, C₁-C₄-Alkyl oder C₁-C₄-Alkoxy darstellt und R₄ Wasserstoff oder Sulfo ist, steht, der Phenylenrest (B) unsubstituiert oder durch Halogen, C₁-C₄-Alkyl oder C₁-C₄-Alkoxy substituiert ist, X für S oder O steht, n die ganze Zahl 1 oder 2 bedeutet, und R, falls n die Zahl 1 ist, gegebenenfalls substituiertes Alkyl, Alkoxy, Cycloalkyl, Alkenyl, Aryl, Aralkyl oder Heteroaryl, oder, falls n die Zahl 2 ist, gegebenenfalls substituiertes Alkylen, Cycloalkylen, Alkenylen, Arylen, Aralkylen oder Heterocyclylen bedeutet.

2. Verbindungen gemäss Anspruch 1, dadurch gekennzeichnet, dass D für den
8-Hydroxy-3,6-disulfo-1-naphthyl-, 8-Hydroxy-4;6-disulfo-1-naphthyl-,
8-Hydroxy-2,4-disulfo-1-naphthyl-, 8-Hydroxy-3;5-disulfo-1-naphthyl-,
8-Hydroxy-4,7-disulfo-1 -naphlhyl-, 8-Hydroxy-5,7-disulfo-1 -naphthyl-,
8-Hydroxy-4-sulfo-1-naphthyl-, 8-Hydroxy-5-sulfo-1 -naphthyl- oder
8-Hydroxy-6-sulfo-1-naphthylrest steht.

3. Verbindungen gemäss Anspruch 1 oder 2, dadurch gekennzeichnet, dass D für den 8-Hydroxy-3,6-disulfo-1-naphthyl-, 8-Hydroxy-4,6-disulfo-1-naphthyl-, 8-Hydroxy-2,4-disulfo-1-naphthyl- oder 8-Hydroxy-4-sulfo-1-naphthylrest, bevorzugt für den 8-Hydroxy-3,6-disulfo-1-naphthylrest, steht.

4. Verbindungen gemäss einem der Ansprüche 1 bis 3, dadurch gekennzeichnet, dass A für einen Rest der Formel (2), worin R₁ und R₂ unabhängig voneinander je Wasserstoff, Methyl, Ethyl, Methoxy, Ethoxy, Acetylamino, Hydroxyacetylamino, n-Propionylamino, Benzoylamino oder Ureido bedeuten, oder für einen Rest der Formel (3), worin R₃ Wasserstoff, Methyl oder Methoxy und R₄ Sulfo bedeuten, steht.

5. Verbindungen gemäss einem der Ansprüche 1 bis 4, dadurch gekennzeichnet, dass A für einen Rest der Formel (2), worin R₁ Methyl oder Methoxy und R₂ Wasserstoff, Methyl, Methoxy, Acetylamino oder Ureido bedeuten, steht.

6. Verbindungen gemäss einem der Ansprüche 1 bis 5, dadurch gekennzeichnet, dass A der Rest von 1-Amino-2-methoxy-5-methylbenzol ist.

7. Verbindungen gemäss einem der Ansprüche 1 bis 6, dadurch gekennzeichnet, dass der Phenylenrest B unsubstituiert oder durch Chlor, Methyl, oder Methoxy substituiert ist.

8. Verbindungen gemäss einem der Ansprüche 1 bis 7, dadurch gekennzeichnet, dass der in Formel (1) in Klammern eingeschlossene Rest der Formel 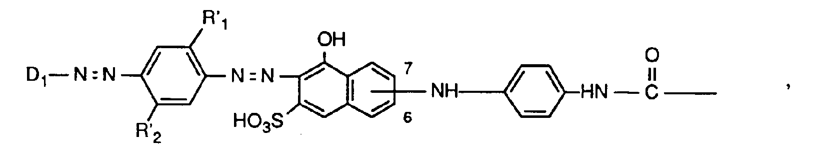 entspricht, worin D₁ den 8-Hydroxy-3,6-disulfo-1-naphthyl-, 8-Hydroxy-4,6-disulfo-1-naphthyl-; 8-Hydroxy-2,4-di- sulfo-1-naphthyl- oder 8-Hydroxy-4-sulfo-1-naphthylrest, R', Methyl oder Methoxy und R'₂ Wasserstoff, Methyl, Methoxy, Acetylamino oder Ureido bedeuten.

9. Verbindungen gemäss einem der Ansprüche 1 bis 8, dadurch gekennzeichnet, dass der in Formel (1) in Klammern eingeschlossene Rest der Formel 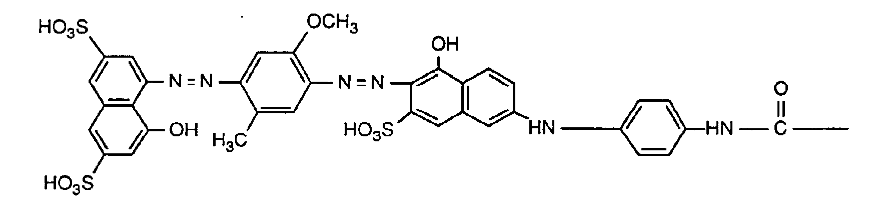 entspricht.

10. Verbindungen gemäss einem der Ansprüche 1 bis 9, dadurch gekennzeichnet, dass n die Zahl 1 bedeutet und R für C₁-C₄-Alkyl, C₁-C₄-Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy, N,N-Dimethyl- oder N,N-Diethylami- no, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1 - oder 2-Naphthyl, unsubstituiertes oder durch Methyl, Methoxy und/oder Chlor substituiertes Benzyl oder für Thiophen-2-yl, Furan-2-yl oder Pyridin-2-, -3-oder -4-yl steht.

11. Verbindungen gemäss einem der Ansprüche 1 bis 10, dadurch gekennzeichnet, dass n die Zahl 1 bedeutet und R für Methyl, Ethyl, unsubstituiertes oder durch Nitro, Chlor, Methyl und/oder Methoxy substituiertes Phenyl, für Thiophen-2-yl, Benzyl oder für 1 - oder 2-Naphthyl und bevorzugt für Phenyl, o-, m- oder p-Chlorphenyl oder für 1- oder 2-Naphthyl steht.

12. Verbindungen gemäss einem der Ansprüche 1 bis 9, dadurch gekennzeichnet, dass n die Zahl 2 bedeutet und R für einen unsubstituierten oder durch Methoxy substituierten C₂-C₄-Alkylenrest, einen unsubstituierten oder durch 1 bis 3 Methylgruppen substituierten Cyclohexylenrest, für trans -CH=CH-, einen unsubstituierten oder durch Methyl oder Methoxy substituierten 1,3- oder 1,4-Phenylenrest, einen C₁-C₃ Alkylen-phenylen- oder C₁-C₂ Alkylen-phenylen-C₁-C₂-alkylenrest, worin das Phenylen jeweils unsubstituiert oder durch Methyl, Methoxy oder Chlor substituiert ist, oder für den Piperazin-1,4-diyl-, Furan-2,5-diyl- oder Thiophen-2,5-diylrest steht.

13. Verbindungen gemäss einem der Ansprüche 1 bis 9, dadurch gekennzeichnet, dass n die Zahl 2 bedeutet und R für den 1,3- oder 1,4-Phenylen-, Thiophen-2,5-diyl- oder Piperazin- 1,4-diylrest oder für den Rest trans -CH=CH- steht.

14. Verbindungen gemäss Anspruch 1 der Formel (1), worin D den 8-Hydroxy-1 -naphthyl-3,6-disulfo-, 8-Hydroxy-4,6-disulfo-1-naphthyl-, -naphthyl-, 8-Hydroxy-2,4-disulfo-1-naphthyl-, 8-Hydroxy-3,5-disulfo-1-naphthyl-, 8-Hydroxy- 4,7-disulfo-1-naphthyl-, 8-Hydroxy-5,7-disulfo-1-naphthyl-, 8-Hydroxy-4-sulfo-1-naphthyl-, 8-Hydroxy-5-sulfo-1-naphthyl- oder 8-Hydroxy-6-sulfo-1-naphthylrest darstellt, A für einen Rest der zuvor angegebenen Formel (2), worin R₁ und R₂ unabhängig voneinander Wasserstoff, Methyl, Ethyl, Methoxy, Ethoxy, Acetylamino, Hydroxyacetylamino, n-Propionylamino, Benzoylamino oder Ureido bedeuten, oder für einen Rest der zuvor angegebenen Formel (3), worin R₃ Wasserstoff, Methyl oder Methoxy und R₄ Sulfo bedeuten, steht, B unsubstituiertes oder durch Chlor, Methyl, Ethyl, Methoxy oder Ethoxy substituiertes Phenylen bedeutet, X für O und n für die Zahl 1 oder 2 steht, und worin R, falls n die Zahl 1 ist, C₁-C₄ Alkyl, C₁-C₄ Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1 - oder 2-Naphthyl, unsubstituiertes oder durch Methyl, Methoxy und/oder Chlor substituiertes Benzyl oder Thiophen-2-yl, Furan-2-yl oder Pyridin-2-, -3- oder -4-yl bedeutet, oder, falls n die Zahl 2 ist, für einen unsubstituierten oder durch Methoxy substituierten C₂-C₄-Alkylenrest, einen unsubstituierten oder durch 1 bis 3 Methylgruppen substituierten Cyclohexylenrest, den Rest trans -CH=CH-, einen unsubstituierten oder durch Methyl oder Methoxy substituierten 1,3- oder 1,4-Phenylenrest, einen C₁-C₃-Alkylen-phenylen- oder C₁-C₂-Alkylen-phenylen-Ci-C₂-alkylenrest, worin das Phenylen jeweils unsubstituiert oder durch Methyl, Methoxy oder Chlor substituiert ist, oder für den Piperazin-1,4-diyl-, Furan-2,5-diyl- oder Thiophen-2,5-diylrest steht

15. Verbindungen gemäss Anspruch 1 der Formel 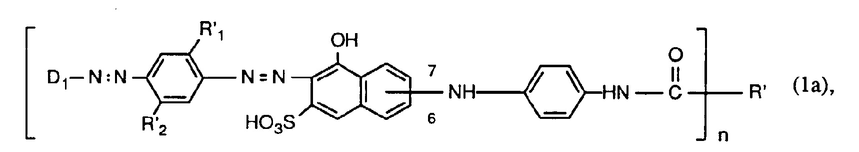 worin D₁ den 8-Hydroxy-3,6-disulfo-1-naphthyl-, 8-Hydroxy-4,6-disulfo-1-naphthyl-, 8-Hydroxy-2,4-disulfo-1-naphthyl- oder 8-Hydroxy-4-sulfo-1-naphthylrest, R'₁ Methyl oder Methoxy, R'₂ Wasserstoff, Methyl, Methoxy, Acetylamino oder Ureido und n die Zahl 1 oder 2 bedeuten, und worin R', falls n 1 ist, für Methyl, Ethyl, unsubstituiertes oder durch Nitro, Chlor, Methyl und/oder Methoxy substituiertes Phenyl, für Thiophen-2-yl, Benzyl oder für 1-oder 2-Naphthyl steht, oder; falls n die Zahl 2 ist; 1,3- oder 1,4-Phenylen, Thiophen-2,5-diyl, Piperazin-1,4-diyl oder trans -CH=CH- bedeutet.

16. Verbindungen gemäss Anspruch 1 der Formel 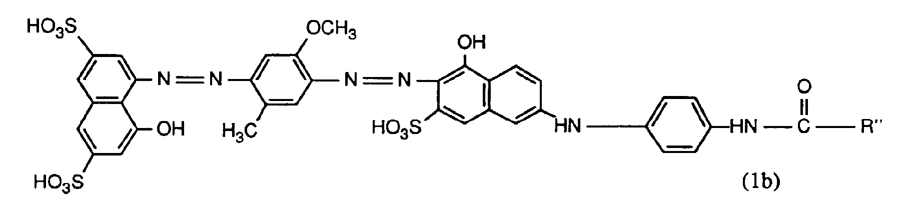 worin R" Phenyl, o-, m- oder p-Chlorphenyl oder 1- oder 2-Naphthyl bedeutet.

17. Verfahren zur Herstellung von Verbindungen der Formel (1) gemäss Anspruch 1, dadurch gekennzeichnet, dass man eine Verbindung der Formel 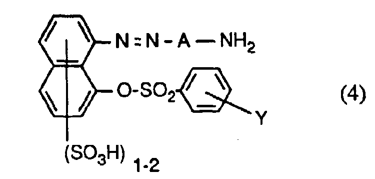 diazotiert und auf eine Verbindung der Formel 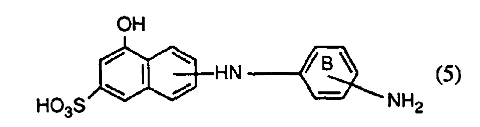 kuppelt, und das erhaltene Disazoprodukt der Formel 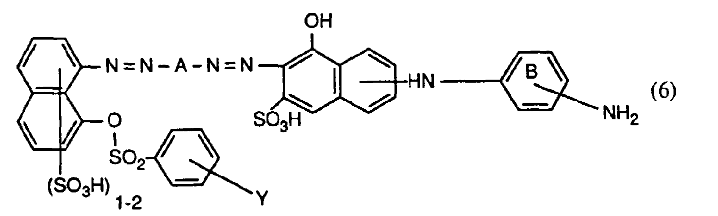 verseift und anschliessend mit einer Verbindung der Formel 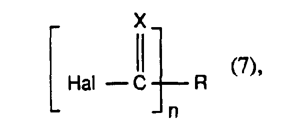 umsetzt, worin A, B, R, X und n jeweils die im Anspruch 1 angegebene Bedeutung haben, Y Wasserstoff, C₁-C₄-Alkyl oder Halogen ist und Hal Halogen, vorzugsweise Chlor, bedeutet.

18. Verfahren zur Herstellung von Verbindungen der Formel (1) gemäss Anspruch 1, dadurch gekennzeichnet, dass man eine Verbindung der Formel 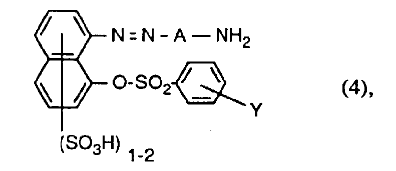 worin A die im Anspruch 1 angegebene Bedeutung hat und Y Wasserstoff, Cᵢ-C₄-Alkyl oder Halogen bedeutet, diazotiert, auf eine Verbindung der Formel 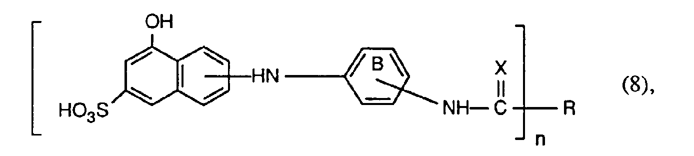 worin B, R, X und n die im Anspruch 1 angegebene Bedeutung haben, kuppelt, und die erhaltene Disazoverbindung anschliessend verseift.

19. Verbindungen der Formel 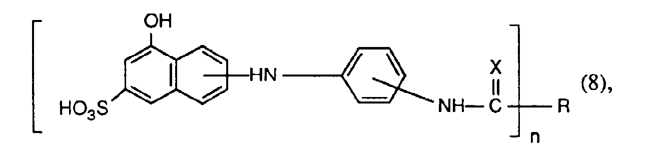 worin R, X und n die im Anspruch 1 angegebene Bedeutung haben, ausgenommen die Verbindungen der Formeln 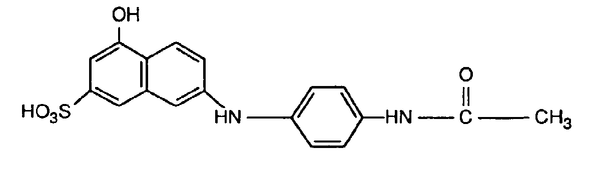 und

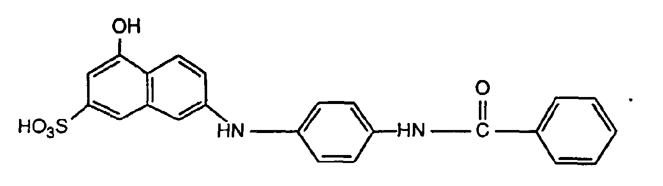

20. Verwendung der Verbindungen der Formel (1) als Farbstoffe zum Färben und Bedrucken von stickstoffhaltigen und insbesondere cellulosischen Fasermaterialien.

21. Verwendung nach Anspruch 20, dadurch gekennzeichnet, dass man Fasergemische aus Synthesefasern und cellulosischen Fasermaterialien, insbesondere Polyester/-Baumwoll-Mischgewebe; in Gegenwart eines Dispersionsfarbstoffes für die Polyesterfasern unter den Färbebedingungen für Polyesterfasern färbt.

22. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Verbindungen der Formel (1) gemäss Anspruch 1 als Farbstoffe verwendet und aus wässriger Flotte bei Temperaturen im Bereich von 100 bis 150°C, vorzugsweise 120 bis 130°C, und einem pH-Wert zwischen 4 und 7,5 färbt.

## Patentansprüche (Patentansprüche für folgende(n) Vertragsstaat(en) : ES)

1. Verfahren zur Herstellung von Verbindungen der Formel 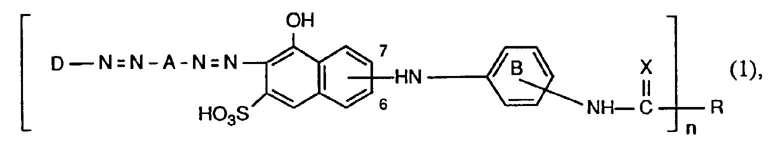 worin D einen 8-Hydroxy-1-naphthylrest, der durch 1 oder 2 Sulfogruppen substituiert ist, darstellt,
A für einen Rest der Formel 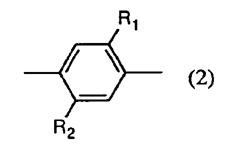 oder der Formel 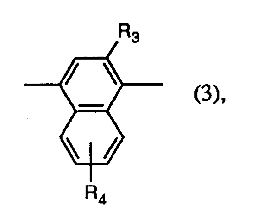 worin R, und R₂ unabhängig voneinander je Wasserstoff, C₁-C₄-Alkyl, unsubstituiertes oder im Alkylteil durch Hydroxy substituiertes C₁-C₄-Alkoxy oder C₂-C₄-Alkanoylamino, unsubstituiertes oder durch C₁-C₄-Alkyl, C₁-C₄-Alkoxy oder Halogen substituiertes Benzoylamino oder Ureido bedeuten, R₃ Wasserstoff, C₁-C₄-Alkyl oder C₁-C₄-Alkoxy darstellt und R₄ Wasserstoff oder Sulfo ist, steht,
der Phenylenrest (B) unsubstituiert oder durch Halogen, C₁-C₄-Alkyl oder C₁-C₄-Alkoxy substituiert ist,
X für S oder 0 steht,
n die ganze Zahl 1 oder 2 bedeutet, und
R, falls n die Zahl 1 ist, gegebenenfalls substituiertes Alkyl, Alkoxy, Cycloalkyl, Alkenyl, Aryl, Aralkyl oder Heteroaryl, oder, falls n die Zahl 2 ist, gegebenenfalls substituiertes Alkylen, Cycloalkylen, Alkenylen, Arylen, Aralkylen oder Heterocyclylen bedeutet, dadurch gekennzeichnet, dass man eine Verbindung der Formel 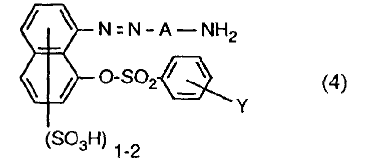 diazotiert und auf eine Verbindung der Formel 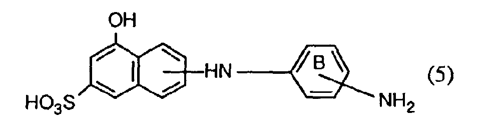 kuppelt, und das erhaltene Disazoprodukt der Formel 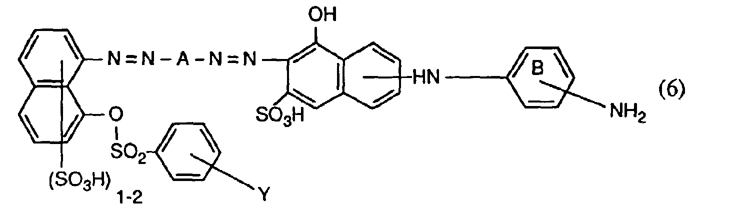 verseift und anschliessend mit einer Verbindung der Formel 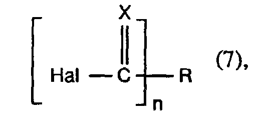 umsetzt, worin A, B, R, X und n jeweils die oben angegebene Bedeutung haben, Y Wasserstoff, C₁-C₄-Alkyl oder Halogen ist und Hal Halogen, vorzugsweise Chlor, bedeutet, oder eine Verbindung der Formel 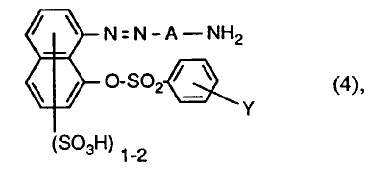 worin A die oben angegebene Bedeutung hat und Y Wasserstoff, C₁-C₄-Alkyl oder Halogen bedeutet, diazotiert, auf eine Verbindung der Formel 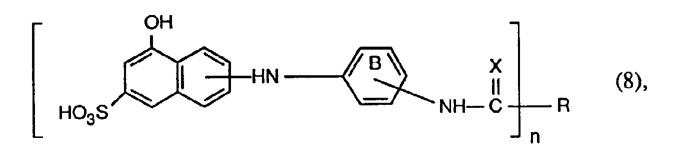 worin B, R, X und n die oben angegebene Bedeutung haben, kuppelt, und die erhaltene Disazoverbindung anschliessend verseift.

2. Verfahren gemäss Anspruch 1, dadurch gekennzeichnet, dass D für den
8-Hydroxy-3,6-disulfo-1-naphthyl-, 8-Hydroxy-4;6-disulfo-1-naphthyl-,
8-Hydroxy-2,4-disulfo-1-naphthyl-, 8-Hydroxy-3,5-disulfo-1-naphthyl-,
8-Hydroxy-4,7-disulfo-1 -naphthyl-, 8-Hydroxy-5,7-disulfo-1 -naphthyl-,
8-Hydroxy-4-sulfo-1-naphthyl-, 8-Hydroxy-5-sulfo-1 -naphthyl- oder
8-Hydroxy-6-sulfo-1-naphthylrest steht.

3. Verfahren gemäss Anspruch 1 oder 2, dadurch gekennzeichnet, dass D für den 8-Hydroxy-3,6-disulfo-1-naphthyl-, 8-Hydroxy-4,6-disulfo-1-naphthyl-, 8-Hydroxy-2,4-disulfo-1-naphthyl- oder 8-Hydroxy-4-sulfo-1-naphthylrest, bevorzugt für den 8-Hydroxy-3,6-disulfo-1-naphthylrest, steht.

4. Verfahren gemäss einem der Ansprüche 1 bis 3, dadurch gekennzeichnet, dass A für einen Rest der Formel (2), worin R₁ und R₂ unabhängig voneinander je Wasserstoff, Methyl, Ethyl, Methoxy, Ethoxy, Acetylamino, Hydroxyacetylamino, n-Propionylamino, Benzoylamino oder Ureido bedeuten, oder für einen Rest der Formel (3), worin R₃ Wasserstoff, Methyl oder Methoxy und R₄ Sulfo bedeuten, steht.

5. Verfahren gemäss einem der Ansprüche 1 bis 4, dadurch gekennzeichnet, dass A für einen Rest der Formel (2), worin R₁ Methyl oder Methoxy und R₂ Wasserstoff, Methyl, Methoxy, Acetylamino oder Ureido bedeuten, steht.

6. Verfahren gemäss einem der Ansprüche 1 bis 5, dadurch gekennzeichnet, dass A der Rest von 1-Amino-2-methoxy-5-methylbenzol ist.

7. Verfahren gemäss einem der Ansprüche 1 bis 6, dadurch gekennzeichnet, dass der Phenylenrest B unsubstituiert oder durch Chlor, Methyl, oder Methoxy substituiert ist.

8. Verfahren gemäss einem der Ansprüche 1 bis 7, dadurch gekennzeichnet, dass der in Formel (1) in Klammern eingeschlossene Rest der Formel 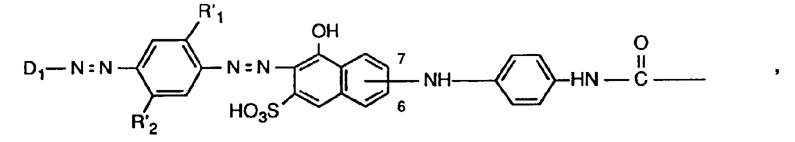 entspricht, worin D₁ den 8-Hydroxy-3,6-disulfo-1-naphthyl-, 8-Hydroxy-4,6-disulfo-1-naphthyl-, 8-Hydroxy-2,4-di- sulfo-1-naphthyl- oder 8-Hydroxy-4-sulfo-1-naphthylrest, R'₁ Methyl oder Methoxy und R'₂ Wasserstoff, Methyl, Methoxy, Acetylamino oder Ureido bedeuten.

9. Verfahren gemäss einem der Ansprüche 1 bis 8, dadurch gekennzeichnet, dass der in Formel (1) in Klammern eingeschlossene Rest der Formel 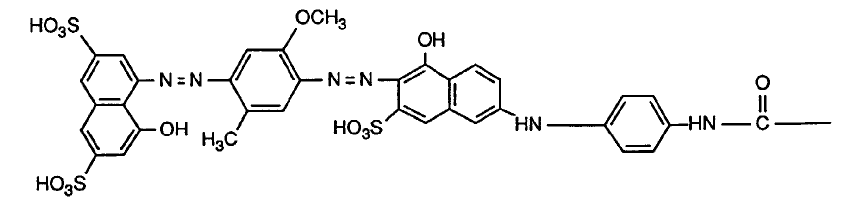 entspricht.

10. Verfahren gemäss einem der Ansprüche 1 bis 9, dadurch gekennzeichnet, dass n die Zahl 1 bedeutet und R für C₁-C₄-Alkyl, C₁-C₄₋Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy, N,N-Dimethyl- oder N,N-Diethylamino, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1 - oder 2-Naphthyl, unsubstituiertes oder durch Methyl, Methoxy und/oder Chlor substituiertes Benzyl oder für Thiophen-2-yl, Furan-2-yl oder Pyridin-2-, -3- oder -4-yl steht.

11. Verfahren gemäss einem der Ansprüche 1 bis 10, dadurch gekennzeichnet, dass n die Zahl 1 bedeutet und R für Methyl, Ethyl, unsubstituiertes oder durch Nitro, Chlor, Methyl und/oder Methoxy substituiertes Phenyl, für Thiophen-2-yl, Benzyl oder für 1- oder 2-Naphthyl und bevorzugt für Phenyl, o-, m- oder p-Chlorphenyl oder für 1- oder 2-Naphthyl steht.

12. Verfahren gemäss einem der Ansprüche 1 bis 9, dadurch gekennzeichnet, dass n die Zahl 2 bedeutet und R für einen unsubstituierten oder durch Methoxy substituierten C₂-C₄-Alkylenrest, einen unsubstituierten oder durch 1 bis 3 Methylgruppen substituierten Cyclohexylenrest, für trans-CH=CH-, einen unsubstituierten oder durch Methyl oder Methoxy substituierten 1,3- oder 1,4-Phenylenrest, einen C₁-C₃-Alkylen-phenylen- oder C₁-C₂-Alkylen-phenylen-C₁-C₂-alkylenrest, worin das Phenylen jeweils unsubstituiert oder durch Methyl, Methoxy oder Chlor substituiert ist, oder für den Piperazin-1,4-diyl-, Furan-2,5-diyl- oder Thiophen-2,5-diylrest steht.

13. Verfahren gemäss einem der Ansprüche 1 bis 9, dadurch gekennzeichnet, dass n die Zahl 2 bedeutet und R für den 1,3- oder 1,4-Phenylen-, Thiophen-2,5-diyl- oder Piperazin-1,4-diylrest oder für den Rest trans -CH=CH- steht.

14. Verfahren gemäss Anspruch 1, worin D den 8-Hydroxy-1-naphthyl-3,6-disulfo-, 8-Hydroxy-4,6-disulfo-1-naphthyl-, 8-Hydroxy-2,4-disulfo-1-naphthyl-, 8-Hydroxy-3,5-disulfo-1-naphthyl-, 8-Hydroxy- 4,7-disulfo-1-naphthyl-, 8-Hydroxy-5,7-disulfo-1-naphthyl-, 8-Hydroxy4-sulfo-1-naphthyl-, 8-Hydroxy-5-sulfo-1-naphthyl-oder 8-Hydroxy-6-sulfo-1-naphthylrest darstellt, A für einen Rest der zuvor angegebenen Formel (2), worin R₁ und R₂ unabhängig voneinander Wasserstoff, Methyl, Ethyl, Methoxy, Ethoxy, Acetylamino, Hydroxyacetylamino, n-Propionylamino, Benzoylamino oder Ureido bedeuten, oderfür einen Rest der zuvorangegebenen Formel (3), worin R₃ Wasserstoff, Methyl oder Methoxy und R₄ Sulfo bedeuten, steht, B unsubstituiertes oder durch Chlor, Methyl, Ethyl, Methoxy oder Ethoxy substituiertes Phenylen bedeutet, X für 0 und n für die Zahl 1 oder 2 steht, und worin R, falls n die Zahl 1 ist, C₁-C₄-Alkyl, C₁-C₄-Alkoxy, unsubstituiertes oder durch 1 bis 3 Methylgruppen substituiertes Cyclopentyl oder Cyclohexyl, unsubstituiertes oder durch Nitro, Chlor, Brom, Methyl, Methoxy, N,N-Dimethyl-oder N,N-Diethyl- amino, Acetylamino, Propionylamino, Benzoylamino, Methoxycarbonyl, Ethoxycarbonyl oder Methylsulfonyl substituiertes Phenyl, unsubstituiertes oder durch Nitro oder Chlor substituiertes 1- oder 2-Naphthyl, unsubstituiertes oder durch Methyl, Methoxy und/oder Chlor substituiertes Benzyl oder Thiophen-2-yl, Furan-2-yl oder Pyridin-2-, -3- oder -4-yl bedeutet, oder, falls n die Zahl 2 ist, für einen unsubstituierten oder durch Methoxy substituierten C₂-C₄-Alkylenrest, einen unsubstituierten oder durch 1 bis 3 Methylgruppen substituierten Cyclohexylenrest, den Rest trans -CH=CH-, einen unsubstituierten oder durch Methyl oder Methoxy substituierten 1,3- oder 1,4-Phenylenrest, einen C₁-C₃-Alkylen-phenylen- oder C₁-C₂-Alkylen-phenylen-C₁-C₂-alkylenrest, worin das Phenylen jeweils unsubstituiert oder durch Methyl, Methoxy oder Chlor substituiert ist, oder für den Piperazin-1,4-diyl-, Furan-2,5-diyl- oder Thiophen-2,5-diylrest steht.

15. Verfahren gemäss Anspruch 1 zur Herstellung von Verbindungen der Formel 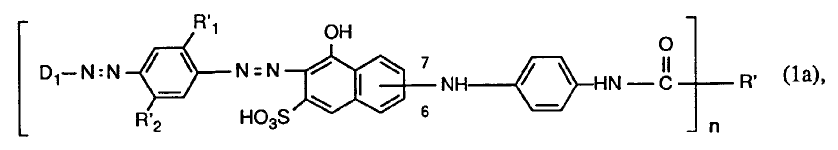 worin D₁ den 8-Hydroxy-3,6-disulfo-1-naphthyl-, 8-Hydroxy-4,6-disulfo-1-naphthyl-, 8-Hydroxy-2,4-disulfo-1-naphthyl- oder 8-Hydroxy-4-sulfo-1-naphthylrest, R₁ Methyl oder Methoxy, R'₂ Wasserstoff, Methyl, Methoxy, Acetylamino oder Ureido und n die Zahl 1 oder 2 bedeuten, und worin R', falls n 1 ist, für Methyl, Ethyl, unsubstituiertes oder durch Nitro, Chlor, Methyl und/oder Methoxy substituiertes Phenyl, für Thiophen-2-yl, Benzyl oder für 1- oder 2-Naphthyl steht, oder falls n die Zähl 2 ist, 1,3- oder 1,4-Phenylen, Thiophen-2,5-diyl, Piperazin-1,4-diyl oder trans -CH=CH- bedeutet.

16. Verfahren gemäss Anspruch 1 zur Herstellung von Verbindungen der Formel 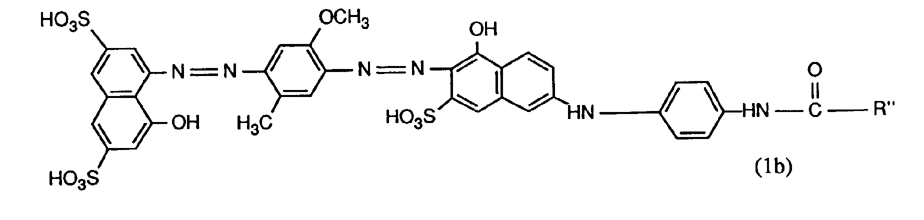 worin R" Phenyl, o-, m- oder p-Chlorphenyl oder 1- oder 2-Naphthyl bedeutet.

17. Verwendung der gemäss Anspruch 1 erhaltenen Verbindungen der Formel (1 ) als Farbstoffe zum Färben und Bedrucken von stickstoffhaitigen und insbesondere cellulosischen Fasermaterialien.

18. Verwendung nach Anspruch 17, dadurch gekennzeichnet, dass man Fasergemische aus Synthesefasern und cellulosischen Fasermaterialien, insbesondere Polyester/- Baumwoll-Mischgewebe, in Gegenwart eines Dispersionsfarbstoffes für die Polyesterfasern unter den Färbebedingungen für Polyesterfasern färbt.

19. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen gemäss Anspruch 1 erhaltene Verbindungen der Formel (1 ) als Farbstoffe verwendet und aus wässriger Flotte bei Temperaturen im Bereich von 100 bis 150°C, vorzugsweise 120 bis 130°C, und einem pH-Wert zwischen 4 und 7,5 färbt.

## Claims (Claims for the following Contracting State(s) : BE, CH, DE, FR, GB, IT, LI)

1. A compound of the formula 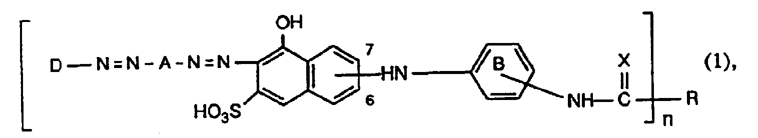 where D is an 8-hydroxy-1-naphthyl radical which is substituted by 1 or 2 sulfo groups,
A is a radical of the formula 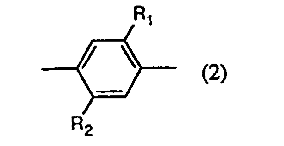 or of the formula 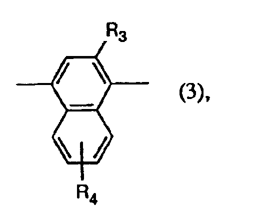 where R₁ and R₂ are each independently of one another hydrogen, C₇-C₄alkyl, unsubstituted or hydroxyl- substituted (in the alkyl moiety) C₁-C₄alkoxy or C₂-C₄alkanoylamino, unsubstituted or C₁-C₄alkyl-, C₁-C₄alkoxy- or halogen-substituted benzoylamino or ureido, R₃ is hydrogen, C₁-C₄alkyl or C₁-C₄alkoxy, and R₄ is hydrogen or sulfo,
and the phenylene radical (B) is unsubstituted or halogen-, C₁-C₄alkyl- or C₁-C₄alkoxy-substituted;
X is S or O,
n is the integer 1 or 2, and
R, if n is 1, is substituted or unsubstituted alkyl, alkoxy, cycloalkyl, alkenyl, aryl, aralkyl or hetaryl or, if n is 2, is substituted or unsubstituted alkylene, cycloalkylene, alkenylene, arylene, aralkylene or heterocyclylene.

2. A compound according to claim 1, wherein D is 8-hydroxy-3,6-disulfo-1-naphthyl, 8-hydroxy-4,6-disulfo-1-naphthyl, 8-hydroxy-2,4-disulfo-1-naphthyl, 8-hydroxy-3,S-disulfo-1-naphthyl, 8-hydroxy-4,7-disulfo-1-naphthyl, 8-hydroxy-5,7-disulfo-1-naphthyl, 8-hydroxy-4-sulfo-1-naphthyl, 8-hydroxy-5-sulfo-1-naphthyl or 8-hydroxy-6-sulfo-1-naphthyl.

3. A compound according to claim 1 or 2, wherein D is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl, preferably 8-hydroxy-3,6-disulfo-1-naphthyl.

4. A compound according to any one of claims 1 to 3, wherein A is a radical of the formula (2) where R₇ and R₂ are each independently of one another hydrogen, methyl, ethyl, methoxy, ethoxy, acetylamino, hydroxyacetylamino, n-propionylamino, benzoylamino or ureido or a radical of the formula (3) where R₃ is hydrogen, methyl or methoxy and R₄ is sulfo.

5. A compound according to any one of claims 1 to 4, wherein A is a radical of the formula (2) where R₁ is methyl or methoxy and R₂ is hydrogen, methyl, methoxy, acetylamino or ureido.

6. A compound according to anyone of claims 1 to 5, wherein A is the radical of 1-amino-2-methoxy-5-methylbenzene.

7. A compound according to any one of claims 1 to 6, wherein the phenylene radical B is unsubstituted or chlorine-, methyl- or methoxy-substituted.

8. A compound according to any one of claims 1 to 7, wherein the bracketed radical in formula (1) conforms to the formula 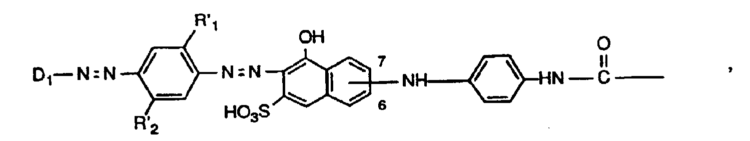 where D₁ is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl, R'₁ is methyl or methoxy and R'₂ is hydrogen, methyl, methoxy acetylamino or ureido.

9. A compound according to any one of claims 1 to 8, wherein the bracketed radical in the formula (1) conforms to the formula

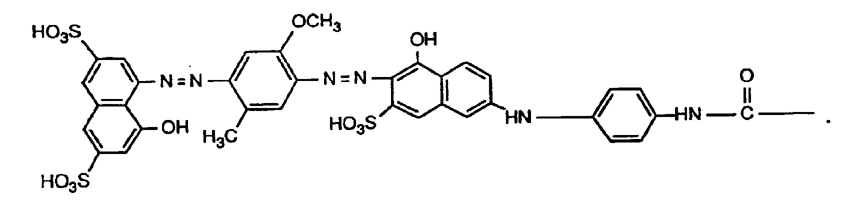

10. A compound according to any one of claims 1 to 9, wherein n is 1 and R is C₁-C₄alkyl, C₁-C₄alkoxy, unsubstituted or methyl-monosubstituted, -disubstituted or -trisubstituted cyclopentyl or cyclohexyl, unsubstituted or nitro-, chlorine-, bromine-, methyl-, methoxy-, N,N-dimethylamino-, N,N-diethylamino-, acetylamino-, propionylamino-, benzoylamino-, methoxycarbonyl-, ethoxycarbonyl- or methylsulfonyl-substituted phenyl, unsubstituted or nitro- or chlorine-substituted 1- or 2-naphthyl, unsubstituted or methyl-, methoxy- and/or chlorine-substituted benzyl, or 2-thiophenyl, 2-furanyl or 2-, 3- or 4-pyridinyl.

11. A compound according to any one of claims 1 to 10, wherein n is 1 and R is methyl, ethyl, unsubstituted or nitro-, chlorine-, methyl- and/or methoxy-substituted phenyl, 2-thiophenyl, benzyl or 1-or2-naphthyl or preferably phenyl, o-, m- or p-chlorophenyl or 1 - or 2-naphthyl.

12. A compound according to any one of claims 1 to 9, wherein n is and R is an unsubstituted or methoxy-substituted C₂-C₄alkylene radical, an unsubstituted or methyl-monosubstituted, -disubstituted or -trisubstituted cyclohexylene radical, trans-CH=CH-, an unsubstituted or methyl- or methoxy-substituted 1,3- or 1,4-phenylene radical, a C₁-C₃alkylene-phenylene or C₁-C₂alkylene-phenylene-C₁-C₂alkylene radical where phenylene is in each case unsubstituted or methyl-, methoxy- or chlorine-substituted, or 1,4-piperazinediyl, 2,5-furandiyl or 2,5-thiophenediyl.

13. A compound according to any one of claims 1 to 9, wherein n is 2 and R is 1,3-or 1,4-phenylene, 2,5-thiophenediyl, 1,4-piperazinediyl or trans-CH=CH-.

14. A compound according to claim of the formula (1) where D is 8-hydroxy-3,6-disulfo-1-naphthyl, 8-hydroxy-4,6-di- sulfo-1-naphthyl, 8-hydroxy-2,4-disulfo-1-naphthyl, 8-hydroxy-3,5-disulfo-1-naphthyl, 8-hydroxy-4,7-disulfo-1-naphthyl, 8-hydroxy-5,7-disulfo-1 -naphthyl 8-hydroxy-4-sulfo-1 -naphthyl, 8-hydroxy-5-sulfo-1 -naphthyl or 8-hydroxy-6-sulfo-1-naphthyl, A is a radical of the aforementioned formula (2) where R₁ and R₂ are each independently of one another hydrogen, methyl, ethyl, methoxy, ethoxy, acetylamino, hydroxyacetylamino, n-propionylamino, benzoylamino or ureido, or a radical of the aforementioned formula (3) where R₃ is hydrogen, methyl or methoxy and R₄ is sulfo, B is unsubstituted or chlorine-, methyl-, ethyl-, methoxy- or ethoxy-substituted phenylene, X is O and n is 1 or 2 and where R, if n is 1, is C₁-C₄alkyl, C₁-C₄alkoxy, unsubstituted or methylmonosubstituted, -disubstituted or -trisubstituted cyclopentyl or cyclopentyl or cyclohexyl, unsubstituted or nitro-, chlorine-, bromine-, methyl-, methoxy-, N,N-dimethylamino-, N,N-diethylamino-, acetylamino-, propionylamino-, benzoylamino-, methoxycarbonyl-, ethoxycarbonyl- or methylsulfonyl-substituted phenyl, unsubstituted or nitro- or chlorine-substituted 1 - or 2-naphthyl, unsubstituted or methyl-, methoxy- and/or chlorine-substituted benzyl, or 2-thiophenyl, 2-furanyl or 2-, 3- or 4-pyridinyl, or, if n is 2, is an unsubstituted or methoxy-substituted C₂-C₄alkylene radical, an unsubstituted or methyl-monosubstituted, -disubstituted or -trisubstituted cyclohexylene radical, trans-CH=CH-, an unsubstituted or methyl- or methoxy-substituted 1,3- or 1,4-phenylene radical, a C₁-C₃alkylene-phenylene or C₁-C₂alkylene- phenylene-C₁-C₂alkylene radical where phenylene is in each case unsubstituted or methyl-, methoxy- or chlorine-substituted, or 1,4-piperazinediyl, 2,5-furandiyl or 2,5-thiophenediyl.

15. A compound according to claim 1 of the formula 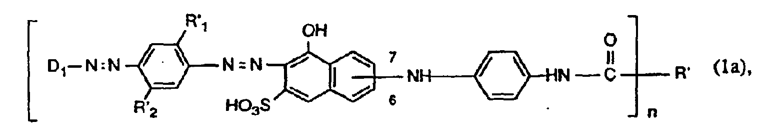 where D₁ is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl; R₁ is methyl or methoxy, R'₂ is hydrogen, methyl, methoxy, acetylamino or ureido, and n is 1 or 2 and where R', if n is 1, is methyl, ethyl, unsubstituted or nitro-, chlorine-, methyl- and/or methoxy-substituted phenyl, 2-thiophenyl, benzyl or 1-or 2-naphthyl or, if n is 2, is 1,3- or 1,4-phenylene, 2,5-thiophenediyl, 1,4-piperazinediyl or trans-CH=CH-.

16. A compound according to claim 1 of the formula 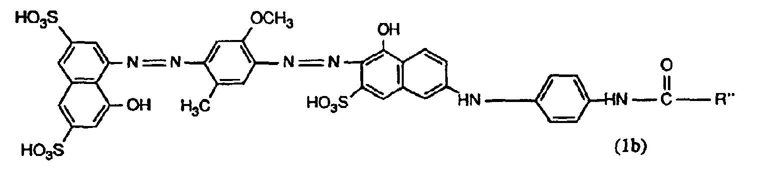 where R" is phenyl, o-, m- or p-chlorophenyl or 1 - or 2-naphthyl.

17. A process for preparing a compound of the formula (1) according to claim 1, which comprises diazotising a compound of the formula 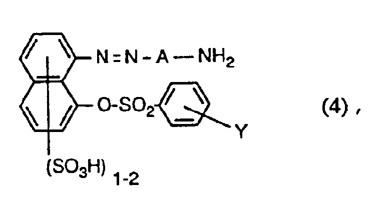 coupling with a compound of the formula 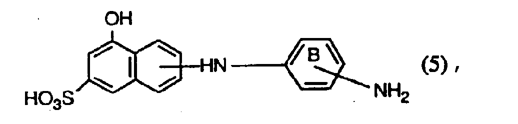 hydrolysing the resulting disazo product of the formula 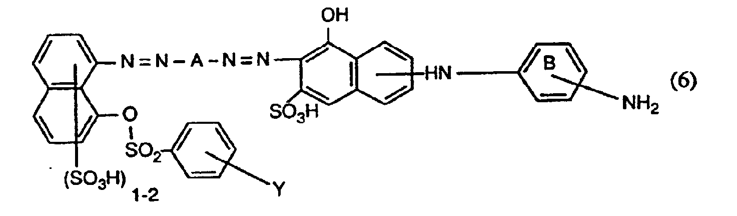 and then reacting with a compound of the formula 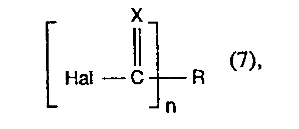 where A, B, R, X and n are each as defined in claim 1, Y is hydrogen, C₁-C₄alkyl or halogen, and Hal is halogen, preferably chlorine.

18. A process for preparing a compound of the formula (1) according to claim 1, which comprises diazotising a compound of the formula 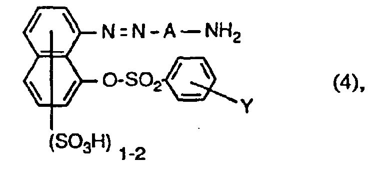 where A is as defined in claim 1 and Y is hydrogen, Cₗ-C₄alkyl or halogen, coupling with a compound of the formula 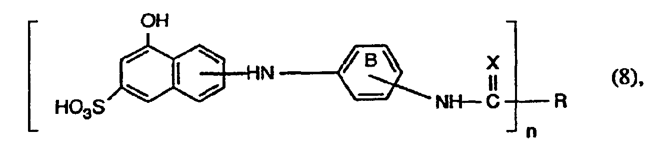 where B, R, X and n are each as defined in claim 1, and then hydrolysing the resulting disazo compound.

19. A compound of the formula 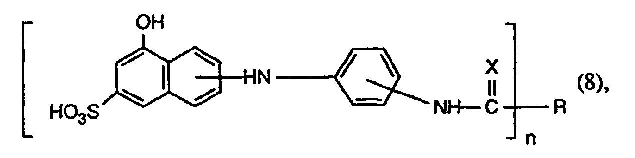 where R, X and n are each as defined in claim 1, but not the compounds of the formulae 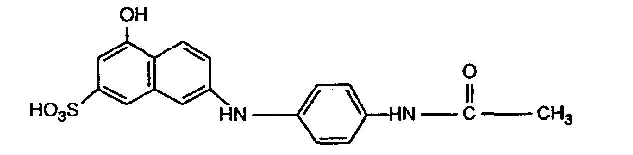 and

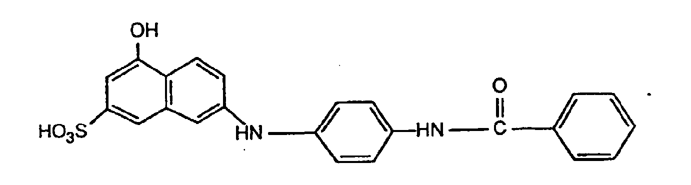

20. The use of a compound of the formula (1) as dye for dyeing and printing nitrogen-containing and, in particular, cellulosic fibre materials.

21. The use according to claim 20, wherein fibre blends formed from synthetic fibres and cellulosic fibre materials, in particular polyester-cotton blend fabrics, are dyed in the presence of a disperse dye for the polyester fibres under the dyeing conditions for polyester fibres.

22. A process for dyeing polyester-cotton blend fabrics with disperse and direct dyes, which comprises using, as well as disperse dyes, compounds of the formula (1) according to claim 1 as dyes in a single-stage, single-bath process and dyeing from an aqueous liquor at temperatures within the range from 1010 to 150°C, preferably 120 to 130°C, and at a pH between 4 and 7.5.

## Claims (Claims for the following Contracting State(s) : ES)

1. A process for preparing a compound of the formula 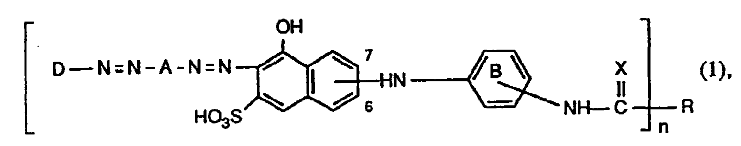 where D is an 8-hydroxy-1-naphthyl radical which is substituted by 1 or 2 sulfo groups,
A is a radical of the formula 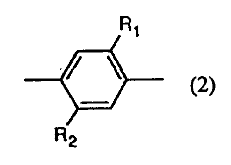 or of the formula 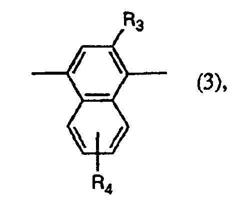 where R₁ and R₂ are each independently of one another hydrogen, C₁-C₄alkyl, unsubstituted or hydroxyl- substituted (in the alkyl moiety) C₁-C₄alkoxy or C₂-C₄alkanoylamino, unsubstituted or C₁-C₄alkyl-, C₁-C₄alkoxy- or halogen-substituted benzoylamino or ureido, R₃ is hydrogen, C₁-C₄alkyl or C₁-C₄alkoxy, and R₄ is hydrogen or sulfo,
and the phenylene radical (B) is unsubstituted or halogen-, C₁-C₄alkyl- or C₁-C₄alkoxy-substituted;
X is S or O,
n is the integer 1 or 2, and
R, if n is 1, is substituted or unsubstituted alkyl, alkoxy, cycloalkyl, alkenyl, aryl, aralkyl or hetaryl or, if n is 2, is substituted or unsubstituted alkylene, cycloalkylene, alkenylene, arylene, aralkylene or heterocyclylene, which comprises diazotising a compound of the formula 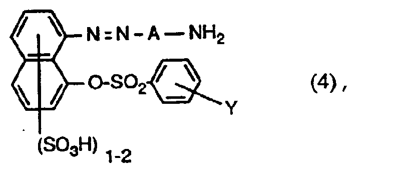 coupling with a compound of the formula 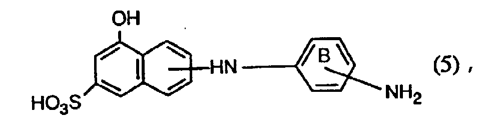 hydrolysing the resulting disazo product of the formula 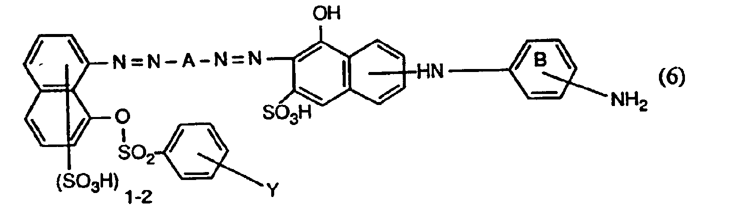 and then reacting with a compound of the formula 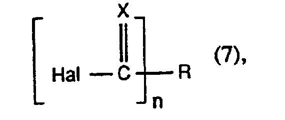 where A, B, R, X and n are each as defined above, Y is hydrogen, C₁-C₄alkyl or halogen, and Hal is halogen, preferably chlorine, or diazotising a compound of the formula 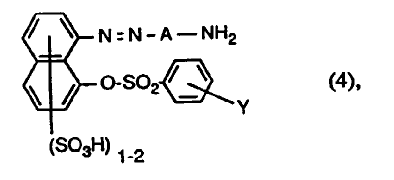 where A is as defined above and Y is hydrogen, C₁-C₄alkyl or halogen, coupling with a compound of the formula 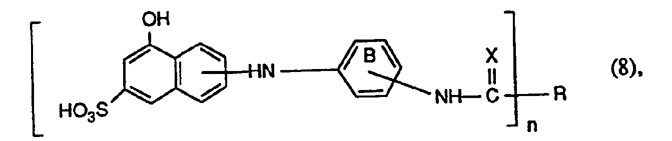 where B, R, X and n are each as defined above, and then hydrolysing the resulting disazo compound.

2. A process according to claim 1, wherein D is 8-hydroxy-3,6-disulfo-1-naphthyl, 8-hydroxy-4,6-disulfo-1-naphthyl, 8-hydroxy-2,4-disulfo-1-naphthyl, 8-hydroxy-3,5-disulfo-1-naphthyl, 8-hydroxy-4,7-disulfo-1-naphthyl, 8-hydroxy-5,7-disulfo-1-naphthyl, 8-hydroxy-4-sulfo-1-naphthyl, 8-hydroxy-5-sulfo-1-naphthyl or 8-hydroxy-6-sulfo-1-naphthyl.

3. A process according to claim 1 or 2, wherein D is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl, preferably 8-hydroxy-3,6-disulfo-1-naphthyl.

4. A process according to any one of claims 1 to 3, wherein A is a radical of the formula (2) where R, and R₂ are each independently of one another hydrogen, methyl, ethyl, methoxy, ethoxy, acetylamino, hydroxyacetylamino, n-propionylamino, benzoylamino or ureido or a radical of the formula (3) where R₃ is hydrogen, methyl or methoxy and R₄ is sulfo.

5. A process according to any one of claims 1 to 4, wherein A is a radical of the formula (2) where R₁ is methyl or methoxy and R₂ is hydrogen, methyl, methoxy, acetylamino or ureido.

6. A process according to any one of claims 1 to 5, wherein A is the radical of 1-amino-2-methoxy-5-methylbenzene.

7. A process according to any one of claims 1 to 6, wherein the phenylene radical B is unsubstituted or chlorine-, methyl- or methoxy-substituted.

8. A process according to any one of claims 1 to 7, wherein the bracketed radical in formula (1) conforms to the formula 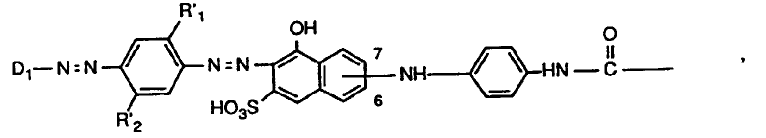 where D₁ is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl, R'₁ is methyl or methoxy and R'₂ is hydrogen, methyl, methoxy, acetylamino or ureido.

9. A process according to any one of claims 1 to 8, wherein the bracketed radical in the formula (1) conforms to the formula

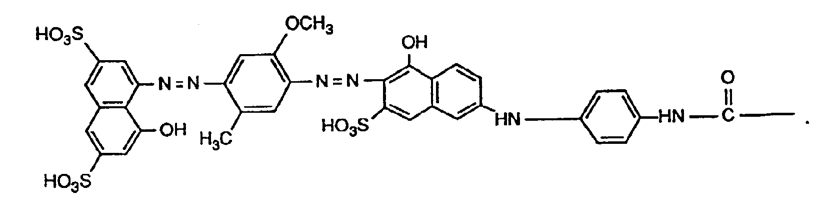

10. A process according to any one of claims 1 to 9, wherein n is 1 and R is C₁-C₄alkyl, C₁-C₄alkoxy; unsubstituted or methyl-monosubstituted, -disubstituted or -trisubstituted cyclopentyl or cyclohexyl, unsubstituted or nitro-, chlorine-, bromine-, methyl-, methoxy-, N,N-dimethylamino-, N,N-diethylamino-, acetylamino-, propionylamino-, benzoylamino-, methoxycarbonyl-, ethoxycarbonyl- or methylsulfonyl-substituted phenyl, unsubstituted or nitro- or chlorine-substituted 1- or 2-naphthyl, unsubstituted or methyl-, methoxy- and/or chlorine-substituted benzyl, or 2-thiophenyl, 2-furanyl or 2-, 3- or 4-pyridinyl.

11. A process according to any one of claims 1 to 10, wherein n is 1 and R is methyl, ethyl, unsubstituted or nitro-, chlorine-, methyl- and/or methoxy-substituted phenyl, 2-thiophenyl, benzyl or 1-or 2-naphthyl or preferably phenyl, o-, m- or p-chlorophenyl or 1 - or 2-naphthyl.

12. A process according to any one of claims 1 to 9, wherein n is 2 and R is an unsubstituted or methoxy-substituted C₂-C₄alkylene radical, an unsubstituted or methyl-monosubstituted, -disubstituted or -trisubstituted cyclohexylene radical, trans-CH=CH-, an unsubstituted or methyl- or methoxy-substituted 1,3- or 1,4-phenylene radical, a C₁-C₃alkylene-phenylene or C₁-C₂alkylene-phenylene-C₁-C₂alkylene radical where phenylene is in each case unsubstituted or methyl-, methoxy- or chlorine-substituted, or 1,4-piperazinediyl, 2,5-furandiyl or 2,5-thiophenediyl

13. A process according to any one of claims 1 to 9, wherein n is 2 and R is 1,3- or 1,4-phenylene, 2,5-thiophenediyl, 1,4-piperazinediyl or trans-CH=CH-.

14. A process according to claim 1 where D is 8-hydroxy-3,6-disulfo-1-naphthyl, 8-hydroxy-4,6-disulfo-1-naphthyl, 8-hydroxy-2,4-disulfo-1-naphthyl, 8-hydroxy-3,5-disulfo-1-naphthyl, 8-hydroxy-4,7-disulfo-1-naphthyl, 8-hydroxy-5,7-disulfo-1-naphthyl, 8-hydroxy-4-sulfo-1-naphthyl, 8-hydroxy-5-sulfo-1-naphthyl or 8-hydroxy-6-sulfo-1-naphthyl, A is a radical of the aforementioned formula (2) where R₁ and R₂ are each independently of one another hydrogen, methyl, ethyl, methoxy, ethoxy, acetylamino, hydroxyacetylamino, n-propionylamino, benzoylamino or ureido, or a radical of the aforementioned formula (3) where R₃ is hydrogen, methyl or methoxy and R₄ is sulfo, B is unsubstituted or chlorine-, methyl-, ethyl-, methoxy- or ethoxy-substituted phenylene, X is 0 and n is 1 or 2 and where R, if n is 1, is C₁-C₄alkyl, C₁-C₄alkoxy, unsubstituted or methyl-monosubstituted, -disubstituted or-trisubstituted cyclopentyl or cyclopentyl or cyclohexyl, unsubstituted or nitro-, chlorine-, bromine-, methyl-, methoxy-, N,N-dimethylamino-, N,N-diethylamino-, acetylamino-, propionylamino-, benzoylamino-, methoxycarbonyl-, ethoxycarbonyl- or methylsulfonyl-substituted phenyl, unsubstituted or nitro- or chlorine-substituted 1- or 2-naphthyl, unsubstituted or methyl-, methoxy- and/or chlorine-substituted benzyl, or 2-thiophenyl, 2-furanyl or 2-, 3- or 4-pyridinyl, or, if n is 2, is an unsubstituted or methoxy-substituted C₂-C₄alkylene radical, an unsubstituted or methyl- monosubstituted, -disubstituted or -trisubstituted cyclohexylene radical, trans-CH-CH-, an unsubstituted or methyl-or methoxy-substituted 1,3- or 1,4-phenylene radical, a C₁-C₃alkylene-phenylene or C₁-C₂alkylene-phenylene-C₁-C₂alkylene radical where phenylene is in each case unsubstituted or methyl-, methoxy- or chlorine-substituted, or 1,4-piperazinediyl, 2,5-furandiyl or 2,5-thiophenediyl.

15. A process according to claim 1 for preparing a compound of the formula 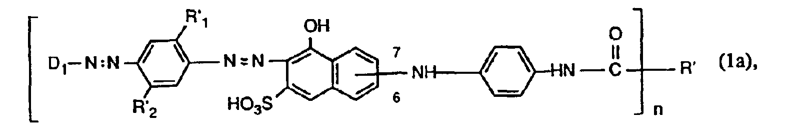 where D₁ is 8-hydroxy-3,6-disulfo-1-naphthyl, 8-hydroxy-4,6-disulfo-1-naphthyl, 8-hydroxy-2,4-disulfo-1-naphthyl or 8-hydroxy-4-sulfo-1-naphthyl; R'₁ is methyl or methoxy, R'₂ is hydrogen, methyl, methoxy, acetylamino or ureido, and n is 1 or 2 and where R', if n is 1, is methyl, ethyl, unsubstituted or nitro-, chlorine-, methyl- and/or methoxy-substituted phenyl, 2-thiophenyl, benzyl or 1-or 2-naphthyl or, if n is 2, is 1,3- or 1,4-phenylene, 2,5-thiophenediyl, 1,4-piperazinediyl or trans-CH-CH-.

16. A process according to claim 1 for the preparation of a compound of the formula 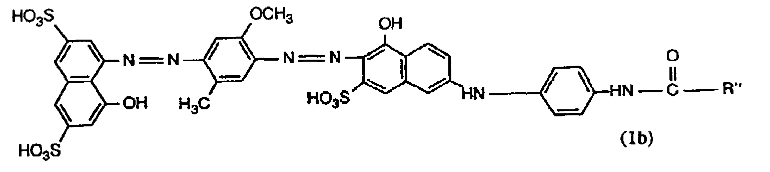 where R" is phenyl, o-, m- or p-chlorophenyl or 1 - or 2-naphthyl.

17. The use of a compound of the formula (1) obtained according to claim 1 as dye for dyeing and printing nitrogen-containing and, in particular, cellulosic fibre materials.

18. The use according to claim 17, wherein fibre blends formed from synthetic fibres and cellulosic fibre materials, in particular polyester-cotton blend fabrics, are dyed in the presence of a disperse dye for the polyester fibres under the dyeing conditions for polyester fibres.

19. A process for dyeing polyester-cotton blend fabrics with disperse and direct dyes, which comprises using, as well as disperse dyes, compounds of the formula (1) obtained according to claim 1 as dyes in a single-stage, single-bath process and dyeing from an aqueous liquor at temperatures within the range from 1010 to 150°C, preferably 120 to 130°C, and at a pH between 4 and 7.5.

## Revendications (Revendications pour l'(les) Etat(s) contractant(s) suivant(s) : BE, CH, DE, FR, GB, IT, LI)

1. Composés de formule : 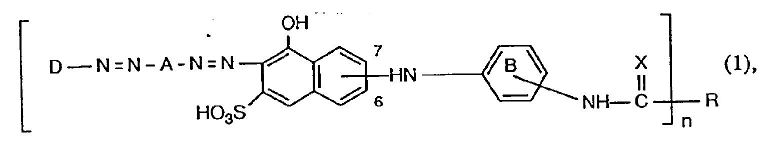 dans laquelle :
D représente un groupe 8-hydroxy-1-naphtyle qui porte un ou deux groupes sulfo en tant que substituants,
A représente un groupe de formule : 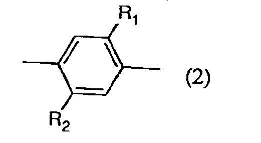 ou de formule 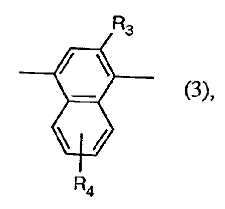 où
R₁ et R₂ représentent chacun, indépendamment l'un de l'autre, un atome d'hydrogène, un groupe alkyle en C₁₋₄, un groupe alcoxy en C₁₋₄ ou alcanoylamino en C₂₋₄, dont le fragment alkyle ne porte pas de substituant ou porte un substituant hydroxy, ou un groupe benzoylamino ou uréido portant ou non un substituant alkyle en C₁₋₄, alcoxy en C₁₋₄ ou halogéno,
R₃ représente un atome d'hydrogène ou un groupe alkyle en C₁₋₄ ou alcoxy en C₁₋₄, et
R₄ représente un atome d'hydrogène ou un groupe sulfo, le groupe phénylène (B) ne porte pas de substituant ou porte un substituant halogéno, alkyle en C₁₋₄ ou alcoxy en C₁₋₄,
X représente S ou O,
n représente le nombre entier 1 ou 2, et
R représente, dans le cas où n représente le nombre 1, un groupe alkyle, alcoxy, cycloalkyle, alcényle, aryle, aralkyle ou hétéroaryle, portant éventuellement des substituants, ou bien, dans le cas où n représente le nombre 2, un groupe alkylène, cycloalkylène, alcénylène, arylène ou aralkylène, portant éventuellement des substituants, ou encore un groupe divalent dérivé d'un hétérocycle et portant éventuellement des substituants.

2. Composés conformes à la revendication 1, caractérisés en ce que D représente un groupe 8-hydroxy-3,6-disulfo-1-naphtyle, 8-hydroxy-4,6-disulfo-1-naphtyle, 8-hydroxy-2,4-disulfo-1-naphtyle, 8-hydroxy-3,5-disulfo-1-naphtyle, 8-hydroxy-4,7-disulfo-1-naphtyle, 8-hydroxy-5,7-disulfo-1-naphtyle, 8-hydroxy-4-sulfo-1-naphtyle, 8-hydroxy-5-sulfo-1-naphtyle ou 8-hydroxy-6-sulfo-1-naphtyle.

3. Composés conformes à la revendication 1 ou 2, caractérisés en ce que D représente un groupe 8-hydroxy-3,6-di- sulfo-1-naphtyle, 8-hydroxy-2,4-disulfo-1-naphtyle ou 8-hydroxy-4-sulfo-1-naphtyle et de préférence un groupe 8-hydroxy-3,6-disulfo-1-naphtyle.

4. Composés conformes à l'une des revendications 1 à 3, caractérisés en ce que A représente un groupe de formule (2), où R₁ et R₂ représentent chacun, indépendamment l'un de l'autre, un atome d'hydrogène ou un groupe méthyle, éthyle, méthoxy, éthoxy, acétylamino, hydroxyacétylamino, n-propionylamino, benzoylamino ou uréido, ou bien A représente un groupe de formule (3) où R₃ représente un atome d'hydrogène ou un groupe méthyle ou méthoxy et R₄ représente un groupe sulfo.

5. Composés conformes à l'une des revendications 1 à 4, caractérisés en ce que A représente un groupe de formule (2) où R₁ représente un groupe méthyle ou méthoxy et R₂ représente un atome d'hydrogène ou un groupe méthyle, méthoxy, acétylamino ou uréido.

6. Composés conformes à l'une des revendications 1 à 5, caractérisés en ce que A représente le reste du 1-amino-2-méthoxy-5-méthyl-benzène.

7. Composés conformes à l'une des revendications 1 à 6, caractérisés en ce que le groupe phénylène symbolisé par B ne porte aucun substituant ou porte des substituants chloro, méthyle ou méthoxy.

8. Composés conformes à l'une des revendications 1 à 7, caractérisés en ce que le groupe représenté entre crochets dans la formule (1 ) correspond à la formule : 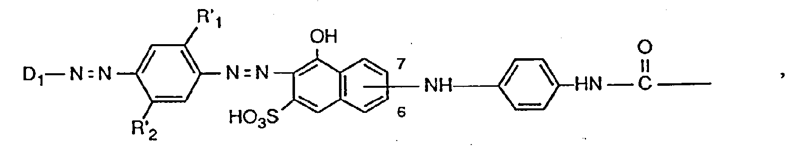 dans laquelle Dᵢ représente un groupe 8-hydroxy-3,6-disulfo-1-naphtyle, 8-hydroxy-2,4-disulfo-1-naphtyle ou 8-hydroxy-4-sulfo-1-naphtyle, R'₁ représente un groupe méthyle ou méthoxy et R'₂ représente un atome d'hydrogène ou un groupe méthyle, méthoxy, acétylamino ou uréido.

9. Composés conformes à l'une des revendications 1 à 8, caractérisés en ce que le groupe représenté entre crochets dans la formule (1 ) correspond à la formule :

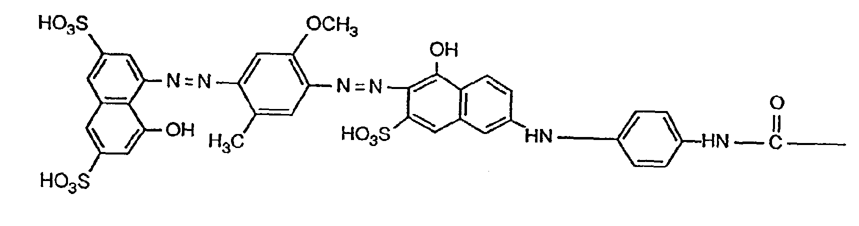

10. Composés conformes à l'une des revendications 1 à 9, caractérisés en ce que n représente le nombre 1 et R représente un groupe alkyle en C₁₋₄, un groupe alcoxy en C₁₋₄, un groupe cyclopentyle ou cyclohexyle ne portant aucun substituant ou portant de 1 à 3 substituants méthyle, un groupe phényle ne portant aucun substituant ou portant des substituants nitro, chloro, bromo, méthyle, méthoxy, N,N-diméthylamino, N,N-diélhylamino, acétylamino, propionylamino, benzoylamino, méthoxycarbonyle, éthoxycarbonyle ou méthylsulfonyle, un groupe 1-naphtyle ou 2-naphtyle ne portant aucun substituant ou portant des substituants nitro ou chloro, un groupe benzyle ne portant aucun substituant ou portant des substituants méthyle, méthoxy et/ou chloro, ou un groupe thiophène-2-yle, furane-2-yle, pyridine-2-yle, pyridine-3-yle ou pyridine-4-yle.

11. Composés conformes à l'une des revendications 1 à 10, caractérisés en ce que n représente le nombre 1 et R représente un groupe méthyle, éthyle, phényle ne portant aucun substituant, phényle portant des substituants nitro, chloro, méthyle et/ou méthoxy, thiophène-2-yle, benzyle, 1-naphtyle ou 2-naphtyle, et de préférence un groupe phényle, o-chlorophényle, m-chlorophényle, p-chlorophényle, 1-naphtyle ou 2-naphtyle.

12. Composés conformes à l'une des revendications 1 à 9, caractérisés en ce que n représente le nombre 2 et R représente un groupe alkylène en C₂₋₄, ne portant aucun substituant ou portant des substituants méthoxy, un groupe cyclohexylène ne portant aucun substituant ou portant de 1 à 3 substituants méthyle, le groupe -CH=CH- trans, un groupe 1,3-phénylène ou 1,4-phénylène, ne portant aucun substituant ou portant des substituants méthyle ou méthoxy, un groupe (alkylène en C₁₋₃)-phénylène ou (alkylène en C₁₋₂)-phénylène-(alkylène en C₁₋₂), où le groupe phénylène ne porte aucun substituant ou porte des substituants méthyle, méthoxy ou chloro, ou le groupe pipérazine-1,4-diyle, furane-2,5-diyle ou thiophène-2,5-diyle.

13. Composés conformes à l'une des revendications 1 à 9, caractérisés en ce que le nombre n vaut 2 et R représente un groupe 1,3-phénylène, 1,4-phénylène, thiophène-2,5-diyle ou pipérazine-1,4-diyle, ou encore un groupe -CH=CH- trans.

14. Composés conformes à la revendication 1, de formule (1), dans laquelle D représente le groupe 8-hydroxy-3,6-di- sulfo-1-naphtyle, 8-hydroxy-4,6-disulfo-1-naphtyle, 8-hydroxy-2,4-disulfo-1-naphtyle, 8-hydroxy-3,5-disulfo-1-naphtyle, 8-hydroxy-4,7-disulfo-1-naphtyle, 8-hydroxy-5,7-disulfo-1-naphtyle, 8-hydroxy-4-sulfo-1-naphtyle, 8-hydroxy-5-sulfo-1-naphtyle ou 8-hydroxy-6-sulfo-1-naphtyle, A représente un groupe de formule (2) indiquée plus haut où R₁ et R₂ représentent chacun, indépendamment l'un de l'autre, un atome d'hydrogène ou un groupe méthyle, éthyle, méthoxy, éthoxy, acétylamino, hydroxyacétylamino, n-propionylamino, benzoylamino ou uréido, ou bien un groupe de formule (3) indiquée plus haut où R₃ représente un atome d'hydrogène ou un groupe méthyle ou méthoxy et R₄ représente un groupe sulfo, B représente un groupe phénylène ne portant aucun substituant ou portant des substituants chloro, méthyle, éthyle, méthoxy ou éthoxy, X représente O et n représente le nombre 1 ou 2, et dans laquelle, si n représente le nombre 1, R représente un groupe alkyle en C₁₋₄, un groupe alcoxy en C₁₋₄, un groupe cyclopentyle ou cyclohexyle ne portant aucun substituant ou portant de 1 à 3 substituants méthyle, un groupe phényle ne portant aucun substituant ou portant des substituants nitro, chloro, bromo, méthyle méthoxy, N,N-diméthylamino, N,N-diéthylamino, acétylamino, propionylamino, benzoylamino, méthoxycarbonyle, éthoxycarbonyle ou méthylsulfonyle, un groupe I-naphtyle ou 2-naphtyle ne portant aucun substituant ou portant des substituants nitro ou chloro, un groupe benzyle ne portant aucun substituant ou portant des substituants méthyle, méthoxy et/ou chloro, ou un groupe thiophène-2-yle, furane-2-yle, pyridine-2-yle, pyridine-3-yle ou pyridine-4-yle, ou bien, si n représente le nombre 2, R représente un groupe alkylène en C₂₋₄ ne portant aucun substituant ou portant des substituants méthoxy un groupe cyclohexylène ne portant aucun substituant ou portant de 1 à 3 substituants méthyle, le groupe -CH-CH- trans, un groupe 1,3-phénylène ou 1,4-phénylène ne portant aucun substituant ou portant des substituants méthyle ou méthoxy, un groupe (alkylène en C₁₋₃)-phénylène ou (alkylène en C₁₋₂)-phénylène-(alkylène en C₁₋₂) où le fragment phénylène ne porte aucun substituant ou porte des substituants méthyle, méthoxy ou chloro, ou un groupe pipérazine-1,4-diyle, furane-2,5-diyle ou thiophène-2,5-diyle.

15. Composés conformes à la revendication 1, de formule : 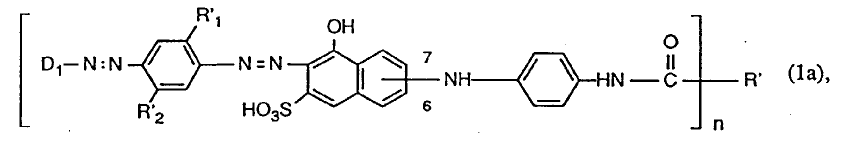 dans laquelle :
D₁ représente un groupe 8-hydroxy-3,6-disulfo-1-naphtyle, 8-hydroxy-4,6-disulfo-1-naphtyle, 8-hydroxy-2,4-di- sulfo-1-naphtyle ou 8-hydroxy-4-sulfo-1-naphtyle,
R'₁ représente un groupe méthyle ou méthoxy,
R'₂ représente un atome d'hydrogène ou un groupe méthyle, méthoxy, acétylamino ou uréido, et
n représente le nombre 1 ou 2, et dans laquelle, si n vaut 1, R' représente un groupe méthyle ou éthyle, un groupe phényle ne portant aucun substituant ou portant des substituants nitro, chloro, méthyle et/ou méthoxy, ou un groupe thiophène-2-yle, benzyle, 1-naphtyle ou 2-naphtyle, ou bien, si n vaut 2, R' représente un groupe 1,3-phénylène, 1,4-phénylène, pipérazine-1,4-diyle ou thiophène-2,5-diyle, ou encore le groupe -CH=CH-trans.

16. Composés conformes à la revendication 1, de formule: 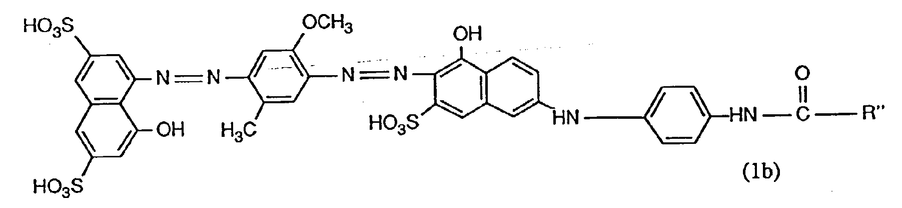 dans laquelle R" représente un groupe phényle, o-chlorophényle, m-chlorophényle ou p-chlorophényle, ou encore un groupe 1-naphtyle ou 2-naphtyle.

17. Procédé de préparation des composés de formule (1) conformes à la revendication 1, caractérisé en ce que l'on diazole un cqmposé de formule : 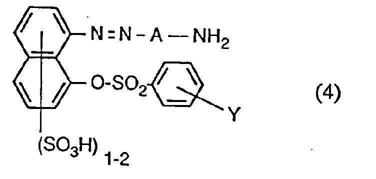 et que l'on fait copuler le composé diazo ainsi obtenu sur un composé de formule: 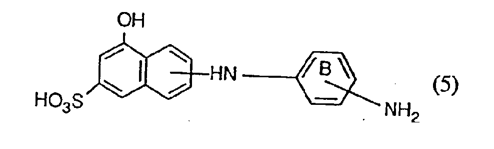 on saponifie le produit dis-azoïque ainsi obtenu, de formule : 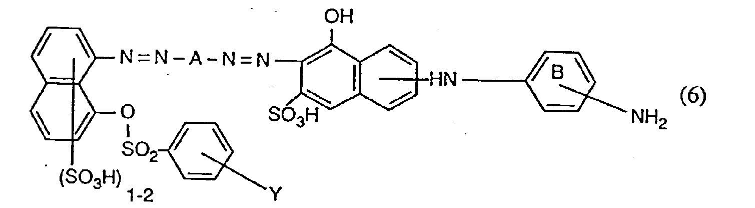 et on le fait ensuite réagir avec un composé de formule : 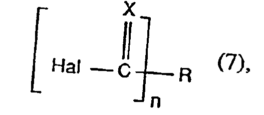 où A, B, R, X et n ont les significations indiquées dans la revendication 1, Y représente un atome d'hydrogène ou d'halogène ou un groupe alkyle en C_{1-4;} et Hal représente un atome d'halogène, de préférence de chlore.

18. Procédé de préparation de composés de formule (1) conformes à la revendication 1, caractérisé en ce que l'on diazote un composé de formule : 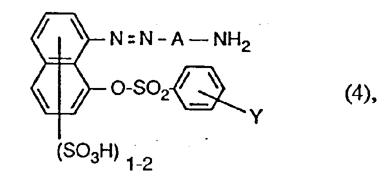 dans laquelle A la signification indiquée dans la revendication 1 et Y représente un atome d'hydrogène ou d'halogène ou un groupe alkyle en C₁₋₄ on fait copuler le composé ainsi obtenu sur un composé de formule : 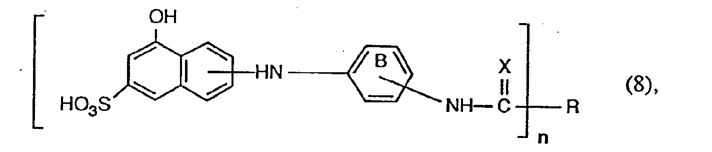 dans laquelle B, R X et n ont les significations indiquées dans la revendication 1, et l'on saponifie ensuite le composé dis-azoïque ainsi obtenu.

19. Composés de formule : 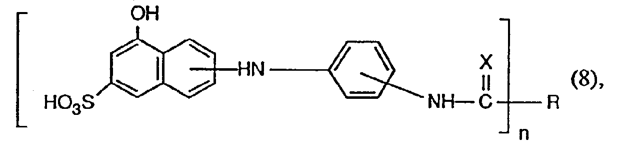 dans laquelle R, X et n ont les significations indiquées dans la revendication 1, à l'exception des composés de formule : 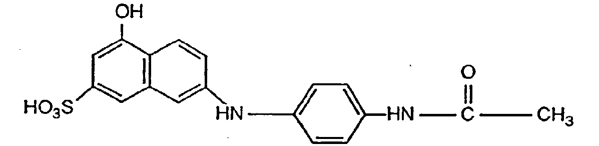 et

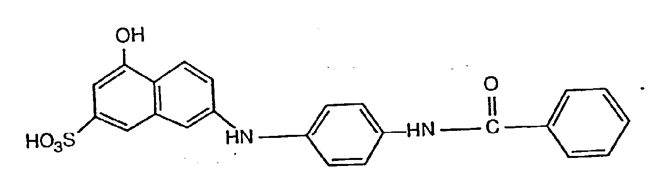

20. Utilisation des composés de formule (1) en tant que colorants destinés à la teinture et à l'impression de matières fibreuses azotées et, en particulier, de matières fibreuses cellulosiques

21. Utilisation conforme à la revendication 20, caractérisée en ce que l'on teint des mélanges de fibres constitués de fibres synthétiques et de matières fibreuses cellulosiques, en particulier des tissus mélangés polyester/coton, en présence d'un colorant dispersé destiné à teindre les fibres de polyester, dans des conditions de teinture appropriées pour les fibres de polyester.

22. Procédé de teinture de tissus mélangés polyester/coton à l'aide de colorants dispersés et de colorants directs, caractérisé en ce que l'on utilise comme colorants, outre des colorants dispersés, des composés de formule (1) conformes à la revendication 1, dans un procédé réalisé en une seule étape et dans un seul bain, et en ce que l'on effectue la teinture dans un bain aqueux, à un pH situé entre 4 et 7,5 et à une température située dans l'intervalle allant de 100°C à 150°C et de préférence de 120°C à 130°C.

## Revendications (Revendications pour l'(les) Etat(s) contractant(s) suivant(s) : ES)

1. Procédé de préparation de composés de formule : 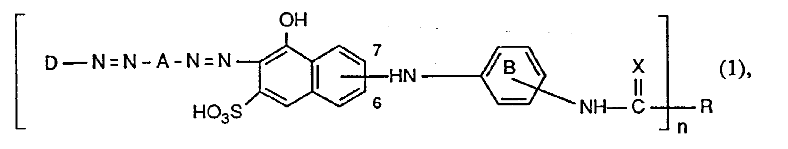 dans laquelle :
D représente un groupe 8-hydroxy-1-naphtyle qui porte un ou deux groupes sulfo en tant que substituants,
A représente un groupe de formule : 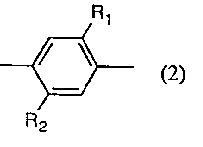 ou de formule : 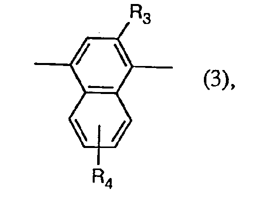 où
R₁ et R₂ représentent chacun, indépendamment l'un de l'autre, un atome d'hydrogène, un groupe alkyle en C₁₋₄, un groupe alcoxy en C₁₋₄ ou alcanoylamino en C₂₋₄, dont le fragment alkyle ne porte pas de substituant ou porte un substituant hydroxy, ou un groupe benzoylamino ou uréido portant ou non un substituant alkyle en C₁₋₄, alcoxy en C₁₋₄ ou halogéno,
R₃ représente un atome d'hydrogène ou un groupe alkyle en C₁₋₄ ou alcoxy en C₁₋₄, et
R₄ représente un atome d'hydrogène ou un groupe sulfo, le groupe phénylène (B) ne porte pas de substituant ou porte un substituant halogéno, alkyle en C₁₋₄ ou alcoxy en C₁₋₄,
X représente S ou 0,
n représente le nombre entier 1 ou 2, et
R représente, dans le cas où n représente le nombre 1, un groupe alkyle, alcoxy, cycloalkyle, alcényle, aryle, aralkyle ou hétéroaryle, portant éventuellement des substituants, ou bien, dans le cas où n représente le nombre 2, un groupe alkylène, cycloalkylène, alcénylène, arylène ou aralkylène, portant éventuellement des substituants, ou encore un groupe divalent dérivé d'un hétérocycle et portant éventuellement des substituants,
caractérisé en ce que l'on diazote un composé de formule : 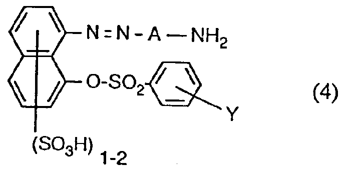 et que l'on fait copuler le composé diazo ainsi obtenu sur un composé de formule: 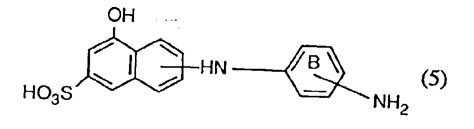 on saponifie le produit dis-azoïque ainsi obtenu, de formule : 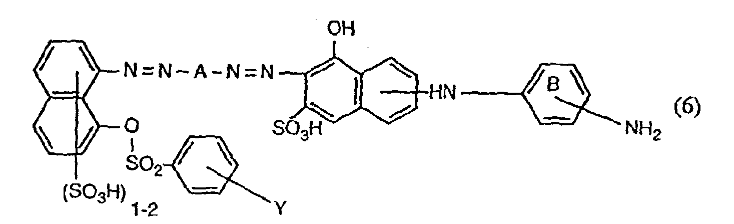 et on le fait ensuite réagir avec un composé de formule : 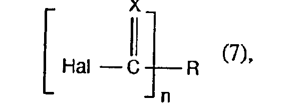 où A, B, R, X et n ont les significations indiquées ci-dessus, Y représente un atome d'hydrogène ou d'halogène ou un groupe alkyle en C₁₋₄, et Hal représente un atome d'halogène, de préférence de chlore, ou en ce que l'on diazote un composé de formule 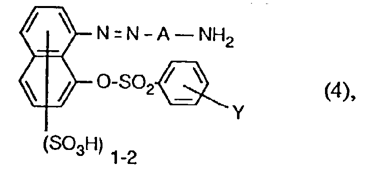 dans laquelle A la signification indiquée ci-dessus et Y représente un atome d'hydrogène ou d'halogène ou un groupe alkyle en C₁₋₄, on fait copuler le composé ainsi obtenu sur un composé de formule : 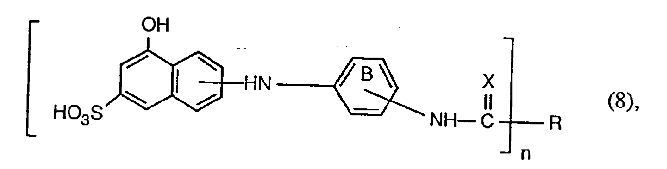 dans laquelle B, R X et n ont les significations indiquées ci-dessus, et l'on saponifie ensuite le composé dis-azoïque ainsi obtenu.

2. Procédé conforme à la revendication 1, caractérisé en ce que D représente un groupe 8-hydroxy-3,6-disulfo-1-naphtyle, 8-hydroxy-4,6-disulfo-1-naphtyle, 8-hydroxy-2,4-disulfo-1-naphtyle, 8-hydroxy-3,5-disulfo-1-naphtyle, 8-hydroxy-4,7-disulfo-1-naphtyle, 8-hydroxy-5,7-disulfo-1-naphtyle, 8-hydroxy-4-sulfo-1-naphtyle, 8-hydroxy-5-sulfo-1-naphtyle ou 8-hydroxy-6-sulfo-1-naphtyle.

3. Procédé conforme à la revendication 1 ou 2, caractérisé en ce que D représente un groupe 8-hydroxy-3,6-disulfo-1-naphtyle, 8-hydroxy-2,4-disulfo-1-naphtyle ou 8-hydroxy-4-sulfo-1-naphtyle et de préférence un groupe 8-hydroxy-3,6-disulfo-1-naphtyle.

4. Procédé conforme à l'une des revendications 1 à 3, caractérisé en ce que A représente un groupe de formule (2), où R₁ et R₂ représentent chacun, indépendamment l'un de l'autre, un atome d'hydrogène ou un groupe méthyle, éthyle, méthoxy, éthoxy, acétylamino, hydroxyacétylamino, n-propionylamino, benzoylamino ou uréido, ou bien A représente un groupe de formule (3) où R₃ représente un atome d'hydrogène ou un groupe méthyle ou méthoxy et R₄ représente un groupe sulfo.

5. Procédé conforme à l'une des revendications 1 à 4, caractérisé en ce que A représente un groupe de formule (2) où R₁ représente un groupe méthyle ou méthoxy et R₂ représente un atome d'hydrogène ou un groupe méthyle, méthoxy, acétylamino ou uréido.

6. Procédé conforme à l'une des revendications 1 à 5, caractérisé en ce que A représente le reste du 1-amino-2-méthoxy-5-méthyl-benzène.

7. Procédé conforme à l'une des revendications 1 à 6, caractérisé en ce que le groupe phénylène symbolisé par B ne porte aucun substituant ou porte des substituants chloro, méthyle ou méthoxy

8. Procédé conforme à l'une des revendications 1 à 7, caractérisé en ce que le groupe représenté entre crochets dans la formule (1 ) correspond à la formule : 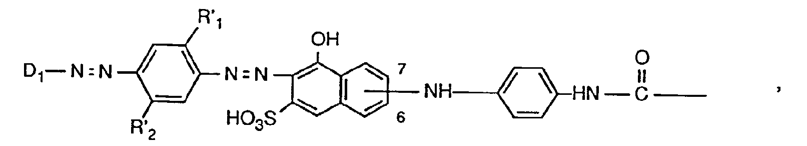 dans laquelle D₁ représente un groupe 8-hydroxy-3,6-disulfo-1-naphtyle, 8-hydroxy-2,4-disulfo-1-naphtyle ou 8-hydroxy-4-sulfo-1-naphtyle, R'₁ représente un groupe méthyle ou méthoxy et R'₂ représente un atome d'hydrogène ou un groupe méthyle, méthoxy, acétylamino ou uréido.

9. Procédé conforme à l'une des revendications 1 à 8, caractérisé en ce que le groupe représenté entre crochets dans la formule (1 ) correspond à la formule :

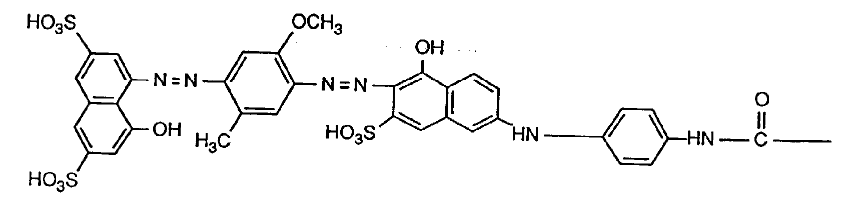

10. Procédé conforme à l'une des revendications 1 à 9, caractérisé en ce que n représente le nombre 1 et R représente un groupe alkyle en C₁₋₄, un groupe alcoxy en C₁₋₄, un groupe cyclopentyle ou cyclohexyle ne portant aucun substituant ou portant de 1 à 3 substituants méthyle, un groupe phényle ne portant aucun substituant ou portant des substituants nitro, chloro, bromo, méthyle, méthoxy, N,N-diméthylamino, N,N-diéthylamino, acétylamino, propionylamino, benzoylamino, méthoxycarbonyle, éthoxycarbonyle ou méthylsulfonyle, un groupe 1-naphtyle ou 2-naphtyle ne portant aucun substituant ou portant des substituants nitro ou chloro, un groupe benzyle ne portant aucun substituant ou portant des substituants méthyle, méthoxy et/ou chloro, ou un groupe thiophène-2-yle, fu- rane-2-yle, pyridine-2-yle, pyridine-3-yle ou pyridine-4-yle.

11. Procédé conforme à l'une des revendications 1 à 10, caractérisé en ce que n représente le nombre 1 et R représente un groupe méthyle, éthyle, phényle ne portant aucun substituant, phényle portant des substituants nitro, chloro, méthyle et/ou méthoxy, thiophène-2-yle, benzyle, 1-naphtyle ou 2-naphtyle, et de préférence un groupe phényle, o-chlorophényle, m-chlorophényle, p-chlorophényle, 1-naphtyle ou 2-naphtyle.

12. Procédé conforme à l'une des revendications 1 à 9, caractérisé en ce que n représente le nombre 2 et R représente un groupe alkylène en C₂_₄, ne portant aucun substituant ou portant des substituants méthoxy un groupe cyclohexylène ne portant aucun substituant ou portant de 1 à 3 substituants méthyle, le groupe -CH=CH- trans, un groupe 1,3-phénylène ou 1,4-phénylène, ne portant aucun substituant ou portant des substituants méthyle ou méthoxy, un groupe (alkylène en C₁₋₃)-phénylène ou (alkylène en C₁₋₂)-phénylène-(alkylène en C₁₋₂), où le groupe phénylène ne porte aucun substituant ou porte des substituants méthyle, méthoxy ou chloro, ou le groupe pipé- razine-1,4-diyle, furane-2,5-diyle ou thiophène-2,5-diyle,

13. Procédé conforme à l'une des revendications 1 à 9, caractérisé en ce que le nombre n vaut 2 et R représente un groupe 1,3-phénylène, 1,4-phénylène, thiophène-2,5-diyle ou pipérazine-1,4-diyle, ou encore un groupe -CH=CH- trans.

14. Procédé conforme à la revendication 1, dans lequel D représente le groupe 8-hydroxy-3,6-disulfo-1-naphtyle, 8-hydroxy-4,6-disulfo-1-naphtyle, 8-hydroxy-2,4-disulfo-1-naphtyle, 8-hydroxy-3,5-disulfo-1-naphtyle, 8-hydroxy-4,7-disulfo-1 -naphtyle, 8-hydroxy-5,7-disulfo-1 -naphtyle, 8-hydroxy-4-sulfo-1 -naphtyle, 8-hydroxy-5-sulfo-1-naphtyle ou 8-hydroxy-6-sulfo-1-naphtyle, A représente un groupe de formule (2) indiquée plus haut où R₁ et R₂ représentent chacun, indépendamment l'un de l'autre, un atome d'hydrogène ou un groupe méthyle, éthyle, méthoxy, éthoxy, acétylamino, hydroxyacétylamino, n-propionylamino, benzoylaminoou uréido, ou bien un groupe de formule (3) indiquée plus haut où R₃ représente un atome d'hydrogène ou un groupe méthyle ou méthoxy et R₄ représente un groupe sulfo, B représente un groupe phénylène ne portant aucun substituant ou portant des substituants chloro, méthyle, éthyle, méthoxy ou éthoxy, X représente 0 et n représente le nombre 1 ou 2, et dans laquelle, si n représente le nombre 1, R représente un groupe alkyle en C₁₋₄, un groupe alcoxy en C₁₋₄, un groupe cyclopentyle ou cyclohexyle ne portant aucun substituant ou portant de 1 à 3 substituants méthyle, un groupe phényle ne portant aucun substituant ou portant des substituants nitro, chloro, bromo, méthyle, méthoxy N,N-diméthylamino, N,N-diéthylamino, acétylamino, propionylamino, benzoylamino, méthoxycarbonyle, éthoxycarbonyle ou méthylsulfonyle, un groupe 1-naphtyle ou 2-naphtyle ne portant aucun substituant ou portant des substituants nitro ou chloro, un groupe benzyle ne portant aucun substituant ou portant des substituants méthyle méthoxy et/ou chloro, ou un groupe thiophène-2-yle, furane-2-yle, pyridine-2-yle, pyridine-3-yle ou pyridine-4-yle, ou bien, si n représente le nombre 2, R représente un groupe alkylène en C₂₋₄ ne portant aucun substituant ou portant des substituants méthoxy, un groupe cyclohexylène ne portant aucun substituant ou portant de 1 à 3 substituants méthyle, le groupe -CH-CH- trans, un groupe 1,3-phénylène ou 1,4-phénylène ne portant aucun substituant ou portant des substituants méthyle ou méthoxy, un groupe (alkylène en C₁₋₃)-phénylène ou (alkylène en C₁₋₂)-phénylène-(alkylène en C₁₋₂où le fragment phénylène ne porte aucun substituant ou porte des substituants méthyle, méthoxy ou chloro, ou un groupe pipérazine-1,4-diyle, furane-2,5-diyle ou thiophène-2,5-diyle.

15. Procédé conforme à la revendication 1, de préparation de composés de formule : 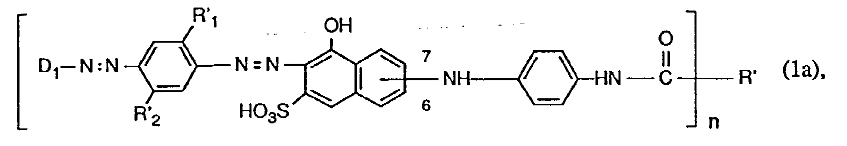 dans laquelle :
D₁ représente un groupe 8-hydroxy-3,6-disulfo-1-naphtyle, 8-hydroxy-4,6-disulfo-1-naphtyle, 8-hydroxy-2,4-di- sulfo-1-naphtyle ou 8-hydroxy-4-sulfo-1-naphtyle,
R'₁ représente un groupe méthyle ou méthoxy,
R'₂ représente un atome d'hydrogène ou un groupe méthyle, méthoxy, acétylamino ou uréido, et
n représente le nombre 1 ou 2,
et dans laquelle, si n vaut 1, R' représente un groupe méthyle ou éthyle, un groupe phényle ne portant aucun substituant ou portant des substituants nitro, chloro, méthyle et/ou méthoxy, ou un groupe thiophène-2-yle, benzyle, 1-naphtyle ou 2-naphtyle, ou bien, si n vaut 2, R' représente un groupe 1,3-phénylène, 1,4-phénylène, pipérazine-1,4-diyle ou thiophène-2,5-diyle, ou encore le groupe -CH=CH- trans.

16. Procédé, conforme à la revendication 1, de préparation des composés de formule : 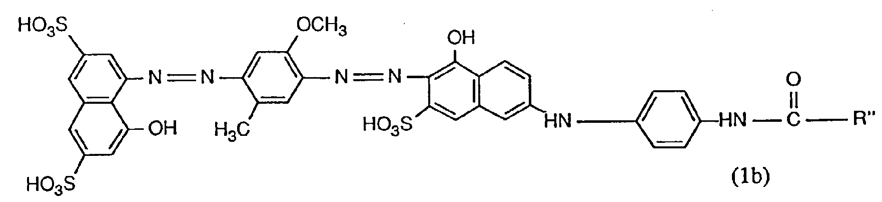 dans laquelle R" représente un groupe phényle, o-chlorophényle, m-chlorophényle ou p-chlorophényle, ou encore un groupe 1-naphtyle ou 2-naphtyle.

17. Utilisation des composés de formule (1), préparés conformément à la revendication 1, en tant que colorants destinés à la teinture et à l'impression de matières fibreuses azotées et, en particulier, de matières fibreuses cellulosiques.

18. Utilisation conforme à la revendication 17, caractérisée en ce que l'on teint des mélanges de fibres constitués de fibres synthétiques et de matières fibreuses cellulosiques, en particulier des tissus mélangés polyester/coton, en présence d'un colorant dispersé destiné à teindre les fibres de polyester, dans des conditions de teinture appropriées pour les fibres de polyester.

19. Procédé de teinture de tissus mélangés polyester/coton à l'aide de colorants dispersés et de colorants directs, caractérisé en ce que l'on utilise comme colorants, outre des colorants dispersés, des composés de formule (1) préparés conformément à la revendication 1, dans un procédé réalisé en une seule étape et dans un seul bain, et en ce que l'on effectue la teinture dans un bain aqueux, à un pH situé entre 4 et 7,5 et à une température située dans l'intervalle allant de 100°C à 150°C et de préférence de 120°C à 130°C.
